# EUROPÄISCHE PATENTSCHRIFT

(11) **EP 4 065 476 B1**
(45) Veröffentlichungstag und Bekanntmachung des Hinweises auf die Patenterteilung: **16.08.2023**
(21) Anmeldenummer: 20797067.4
(22) Anmeldetag: 21.10.2020
(51) Int. Cl.: B65D 5/02, B65D 5/40, B65D 85/72

(54) **FLÄCHENFÖRMIGES VERBUNDMATERIAL, PACKUNGSMANTEL UND PACKUNG MIT TRAPEZFÖRMIGEM GIEBEL**
PLANAR COMPOSITE MATERIAL, PACKET SLEEVE AND PACKET HAVING A TRAPEZOIDAL GABLE
MATÉRIAU COMPOSITE PLAN, MANCHON DE PAQUET ET PAQUET À PIGNON TRAPÉZOÏDAL

(30) Priorität: 29.11.2019 DE 102019132426
(43) Veröffentlichungstag der Anmeldung: 05.10.2022
(73) Patentinhaber: SIG Combibloc Services AG, 8212 Neuhausen am Rheinfall (CH)
(72) Erfinder: GIEROW, Norman, 40545 Düsseldorf (DE); HAUSER, Philippe, 8200 Schaffhausen (CH); KAYLAN, Ali, 40477 Düsseldorf (DE); KECK, Thomas, 52064 Aachen (DE); KLEIN, Heike, 40547 Düsseldorf (DE); MERGEL, Stefan, 40225 Düsseldorf (DE); SCHULTE, Georg, 47918 Tönisvorst (DE); WIRTZ, Christoph, 52441 Linnich (DE)
(74) Vertreter: Cohausz & Florack
(86) Internationale Anmeldenummer: PCT/EP2020/079561
(87) Internationale Veröffentlichungsnummer: WO 2021/104754

(56) Entgegenhaltungen:
- WO-A1-2004/076302
- DE-A1-102017 215 078
- US-S- D 540 164
- US-S1- D 540 164

## Beschreibung

Die Erfindung betrifft ein flächenförmiges Verbundmaterial zur Herstellung einer Packung, umfassend: eine Polymeraußenschicht, eine Polymerinnenschicht, eine faserhaltige Trägerschicht, die zwischen der Polymeraußenschicht und der Polymerinnenschicht angeordnet ist, wobei das flächenförmige Verbundmaterial eine Vielzahl von Faltlinien aufweist, die so angeordnet und ausgestaltet sind, dass durch Falten des flächenförmigen Verbundmaterials entlang der Faltlinien und durch Verbinden von Nahtflächen des flächenförmigen Verbundmaterials eine geschlossene Packung herstellbar ist, eine Mantelfläche, wobei die Mantelfläche eine vordere Fläche, eine erste Seitenfläche, eine zweite Seitenfläche, eine erste hintere Fläche und eine zweite hintere Fläche umfasst, Bodenflächen, wobei die Bodenflächen dreieckige Bodenflächen und viereckige Bodenflächen umfassen, und Giebelflächen, wobei die Giebelflächen dreieckige Giebelflächen und viereckige Giebelflächen umfassen, wobei die Bodenflächen und die Giebelflächen auf gegenüberliegenden Seiten der Mantelfläche angeordnet sind.

Die Erfindung betrifft zudem einen Packungsmantel aus einem Verbundmaterial zur Herstellung einer Packung, umfassend: eine Mantelfläche, wobei die Mantelfläche eine vordere Fläche, eine erste Seitenfläche, eine zweite Seitenfläche, eine erste hintere Fläche und eine zweite hintere Fläche umfasst, Bodenflächen, wobei die Bodenflächen dreieckige Bodenflächen und viereckige Bodenflächen umfassen, Giebelflächen, wobei die Giebelflächen dreieckige Giebelflächen und viereckige Giebelflächen umfassen, zwei Scheinfaltlinien, die parallel zueinander durch die Mantelfläche verlaufen, und eine Längsnaht, die zwei Randbereiche des Verbundmaterials zu einem umlaufenden Packungsmantel verbindet, der sowohl im Bereich der Bodenflächen als auch im Bereich der Giebelflächen offen ist, wobei die Bodenflächen und die Giebelflächen auf gegenüberliegenden Seiten der Mantelfläche angeordnet sind, und wobei der Packungsmantel entlang von beiden Scheinfaltlinien gefaltet ist.

Die Erfindung betrifft schließlich eine Packung aus einem Verbundmaterial, wobei die Packung aus einem flächenförmigen Verbundmaterial nach dem Oberbegriff von Patentanspruch 1 hergestellt ist, oder wobei die Packung aus einem Packungsmantel nach dem Oberbegriff von Patentanspruch 14 hergestellt ist, und wobei die Packung im Bereich der Bodenflächen und im Bereich der Giebelflächen verschlossen ist. Insbesondere kann vorgesehen sein, dass die Packung aus einem flächenförmigen Verbundmaterial nach einem der Ansprüche 1 bis 13 hergestellt ist oder dass die Packung aus einem Packungsmantel nach einem der Ansprüche 14 bis 18 hergestellt ist, und wobei die Packung im Bereich der Bodenflächen und im Bereich der Giebelflächen verschlossen ist.

Verpackungen (im gefüllten Zustand: "Packungen") können auf unterschiedliche Weisen und aus verschiedensten Materialien hergestellt werden. Eine weit verbreitete Möglichkeit ihrer Herstellung besteht darin, aus einem flächenförmigen Verbundmaterial durch Zuschneiden einen "Zuschnitt" herzustellen, aus dem durch Falten und weitere Schritte zunächst ein Packungsmantel und schließlich eine Packung entstehen. Alternativ hierzu ist es auch möglich, aus dem Verbundmaterial direkt - also ohne den Zwischenschritt des Packungsmantels - eine Packung herzustellen. Diese Herstellungsart hat unter anderem den Vorteil, dass das Verbundmaterial und die Packungsmäntel sehr flach sind und somit platzsparend gestapelt werden können. Auf diese Weise können das Verbundmaterial und die Packungsmäntel an einem anderen Ort hergestellt werden als die Faltung und Befüllung der Packung erfolgt. Als Material werden häufig Verbundstoffe eingesetzt, beispielsweise ein flächenförmiger Verbund aus mehreren dünnen Lagen aus Papier, Pappe, Kunststoff und/oder Metall, insbesondere Aluminium. Derartige Packungen finden insbesondere in der Lebensmittelindustrie große Verbreitung.

Ein erster Herstellungsschritt besteht häufig darin, aus einem flächenförmigen Verbundmaterial durch Zuschneiden einen "Zuschnitt" herzustellen und aus dem Zuschnitt durch Falten und Verschweißen oder Verkleben einer Naht einen umlaufenden Packungsmantel ("Sleeve") zu erzeugen. Die Faltung erfolgt üblicherweise entlang von geprägten Faltlinien. Die Lage der Faltlinien entspricht dabei oftmals der Lage der Kanten der aus dem Packungsmantel herzustellenden Packung. Dies hat den Vorteil, dass das flächenförmige Verbundmaterial bzw. der daraus erzeugte Zuschnitt und der Packungsmantel ausschließlich an Stellen gefaltet werden, die bei der fertigen Packung ohnehin gefaltet sind. Ein Verfahren zur Herstellung einer Packung aus einem Packungsmantel ist beispielsweise aus der WO 2015/003852 A9 bekannt (dort insbesondere Fig. 1A bis Fig. 1E). Die dort beschriebene Packung weist eine rechteckige Querschnittsfläche auf und ist insgesamt quaderförmig.

Ein Nachteil der Faltung der Packungsmäntel entlang der späteren Packungskanten liegt jedoch darin, dass ausschließlich Packungen mit eckigen Querschnittsflächen hergestellt werden können. Zudem können ausschließlich Packungen hergestellt werden, deren Querschnittsfläche in vertikaler Richtung der Packung identisch ist. Alternative Gestaltungen wie beispielsweise Rundungen oder Freiformen anstelle der Kanten sind hingegen nicht möglich.

Um eine variablere Formgebung zu ermöglichen, wurden auch bereits Packungsmäntel vorgeschlagen, deren Faltkanten nicht den Packungskanten der aus dem Packungsmantel hergestellten Packung entsprechen. Dies wird dadurch erreicht, dass der Packungsmantel entlang von so genannten "Scheinfaltlinien" gefaltet ist, die bei der Herstellung der Packung wieder zurückgefaltet werden und somit keine Kanten der Packung bilden. Dies ermöglich es, Packungen herzustellen, deren Mantelfläche keine Kanten oder jedenfalls keine geraden Kanten aufweist. Derartige Packungsmäntel und daraus hergestellte Packungen sind beispielsweise aus der DE 10 2016 003 824 A1 oder der DE 10 2017 215 078 A1 bekannt. Wenngleich der Einsatz von "Scheinfaltlinien" eine etwas größere Flexibilität bei der Gestaltung der Form der Mantelfläche einer Packung ermöglicht, haben die Scheinfaltlinien keinen Einfluss auf die Gestaltung des Bodens und des Giebels der Packung.

Vor diesem Hintergrund liegt der Erfindung die Aufgabe zugrunde, das eingangs beschriebene und zuvor näher erläuterte flächenförmige Verbundmaterial derart auszugestalten und weiterzubilden, dass die Herstellung von Packungen, insbesondere flüssigkeitsdichten Packungen - mit noch komplexeren Geometrien auch im Giebel- und Bodenbereich ermöglicht wird.

Diese Aufgabe wird bei einem flächenförmigen Verbundmaterial nach dem Patentanspruch 1 gelöst durch wenigstens eine viereckige Giebelfläche mit zwei kleinen Giebelflächenwinkeln, die kleiner sind als 90°, mit zwei großen Giebelflächenwinkeln, die größer sind als 90° und mit einer Winkelsumme, die größer ist als 360°, wobei wenigstens eine Seite der viereckigen Giebelfläche (6") nach außen gekrümmt ist.

Das erfindungsgemäße flächenförmige Verbundmaterial dient zur Herstellung einer Packung. Das flächenförmige Verbundmaterial kann auf eine definierte Größe zugeschnitten sein, wobei die Größe zur Herstellung mehrerer Packungen ausreichen kann oder nur für die Herstellung einer einzelnen Packung ausreicht. Ein auf eine definierte Größe - insbesondere auf die Größe einer einzelnen Packung - zugeschnittenes Verbundmaterial wird daher auch als "Zuschnitt" bezeichnet.

Das flächenförmige Verbundmaterial weist mehrere einander überlagernde und miteinander verbundene Schichten auf und bildet auf diese Weise einen flächenförmigen Verbund. Das flächenförmige Verbundmaterial umfasst eine Polymeraußenschicht, eine Polymerinnenschicht und eine faserhaltige Trägerschicht, die zwischen der Polymeraußenschicht und der Polymerinnenschicht angeordnet ist.

Die Polymerinnenschicht und die Polymeraußenschicht verleihen dem Verbundmaterial flüssigkeitsdichte Eigenschaften, da sie aus Kunststoff hergestellt sind. Die faserhaltige Trägerschicht (vorzugsweise: Papier oder Pappe) dient hingegen vor allem dazu, dem Verbundmaterial verbesserte mechanische Eigenschaften zu verleihen, insbesondere eine verbesserte Steifigkeit. Optional kann zudem eine Barriereschicht vorgesehen sein, die ebenfalls zwischen der Polymeraußenschicht und der Polymerinnenschicht angeordnet ist (vorzugsweise zwischen der faserhaltigen Trägerschicht und der Polymerinnenschicht). Die Barriereschicht kann beispielsweise aus Aluminium hergestellt sein und soll verhindern, Licht und/oder Sauerstoff durchzulassen. Das flächenförmige Verbundmaterial weist eine Mantelfläche auf, die eine vordere Fläche, eine erste Seitenfläche, eine zweite Seitenfläche, eine erste hintere Fläche und eine zweite hintere Fläche umfasst. Das flächenförmige Verbundmaterial weist zudem Bodenflächen auf, die dreieckige Bodenflächen und viereckige Bodenflächen umfassen. Das flächenförmige Verbundmaterial weist weiterhin Giebelflächen auf, die dreieckige Giebelflächen und viereckige Giebelflächen umfassen. Vorzugsweise weisen die Bodenflächen und die Giebelflächen jeweils zwei oder drei Vierecksflächen und sechs Dreiecksflächen auf. Die Vierecksflächen dienen der Faltung des Bodens und des Giebels der Packung. Die Dreiecksflächen dienen dazu, das überschüssige Verbundmaterial zu abstehenden "Ohren" zu falten, die anschließend an die Packung angelegt werden. Die Bodenflächen und die Giebelflächen sind auf gegenüberliegenden Seiten der Mantelfläche angeordnet. Vorzugsweise sind die Giebelflächen - bei einer stehenden Packung - oberhalb der Mantelfläche angeordnet und die Bodenflächen sind unterhalb der Mantelfläche angeordnet. Das flächenförmige Verbundmaterial weist zudem eine Vielzahl von Faltlinien auf, die so angeordnet und ausgestaltet sind, dass durch Falten des flächenförmigen Verbundmaterials entlang der Faltlinien und durch Verbinden von Nahtflächen des flächenförmigen Verbundmaterials eine geschlossene Packung herstellbar ist. Die Faltlinien (insbesondere vor dem Falten auch: "Rilllinien") sollen also das Falten des flächenförmigen Verbundmaterials erleichtern; sie können durch Materialschwächungen erzeugt werden. Da die aus dem Verbundmaterial herzustellenden Packungen flüssigkeitsdicht sein sollen, werden als Materialschwächungen keine Perforationen, sondern (meist linienförmige) Materialverdrängungen eingesetzt, die mit Drückwerkzeugen in das Verbundmaterial eingeprägt werden.

Erfindungsgemäß ist wenigstens eine viereckige Giebelfläche mit zwei kleinen Giebelflächenwinkeln, die kleiner sind als 90°, mit zwei großen Giebelflächenwinkeln, die größer sind als 90° und mit einer Winkelsumme, die größer ist als 360°, vorgesehen. Durch Winkel, die ungleich 90° sind, wird eine Giebelfläche erreicht, dessen Form von einer rechteckigen oder quadratischen Form abweicht. Eine viereckige Giebelfläche mit zwei kleinen (<90°) und zwei großen (>90°) Giebelflächenwinkeln kann beispielsweise durch ein Trapez, ein Parallelogramm oder durch eine Raute erreicht werden. Eine Winkelsumme, die von 360° abweicht, kann beispielsweise dadurch erreicht werden, dass eine oder mehrere Seiten der viereckigen Giebelfläche nicht gerade, sondern gekrümmt verlaufen (wie dies beispielsweise bei einem Bogenvieleck bzw. Bogenpolygon der Fall ist). Eine Winkelsumme, die größer ist als 360° wird in der Erfindung dadurch erreicht, dass wenigstens eine Seite der viereckigen Giebelfläche nach außen gekrümmt ist. Die Bodenflächenwinkel betragen hingegen vorzugsweise 90°, so dass sich eine rechteckige, insbesondere quadratische Bodenform ergibt. Die erfindungsgemäße Gestaltung der Giebelfläche hat mehrere Vorteile. Neben einer optisch ansprechenderen Form wird der technische Effekt erreicht, dass die aus dem flächenförmigen Verbundmaterial herzustellenden Packungen einfacher mit einer Hand gegriffen werden können, da eine Kante der Giebelfläche (vorzugsweise die vordere Kante) kürzer ist als die anderen Kanten (insbesondere die hintere Kante), so dass die Packung an der Vorderseite schmaler ist. Die erfindungsgemäße Gestaltung führt zudem zu dem technischen Effekt, dass die Berührungsfläche zwischen nebeneinander angeordneten Packungen (z.B. beim Transport oder im Verkaufsregal) geringer ist als bei quaderförmigen Packungen, deren Seitenflächen sich fast vollständig berühren. Mit anderen Worten bleibt zwischen nebeneinander angeordneten Packungen ein Spalt bzw. Freiraum, durch den Luft zirkulieren kann. Dies hat den Vorteil einer Verringerten Gefahr von Schimmelbildung infolge von Feuchtigkeit. Indem die Winkelsumme größer ist als 360° wird zudem erreicht, dass mehr Platz für ein Ausgießelement vorhanden ist. Vorzugsweise weist die viereckige Giebelfläche eine Winkelsumme wenigstens 370°, insbesondere von wenigstens 380°, bevorzugt von wenigstens 390° auf. Als vorteilhaft haben sich Winkelsummen im Bereich zwischen 390° und 410° herausgestellt.

Gemäß einer Weiterbildung des flächenförmigen Verbundmaterials ist vorgesehen, dass wenigstens eine der viereckigen Giebelflächen etwa trapezförmig ist. Indem die Giebelfläche des Verbundmaterials etwa trapezförmig gestaltet ist, wird auch der Giebel der daraus hergestellten Packung trapezförmig. Die Trapezform hat den Vorteil, dass eine der beiden parallelen Seiten bzw. Kanten (vorzugsweise die vordere Kante des Giebels) kürzer ist als die gegenüberliegende Seite bzw. Kante (vorzugsweise die hintere Kante des Giebels) - im Gegensatz zu einer Raute, bei der die gegenüberliegenden Seiten gleich lang sind. Dies ermöglicht es, auch Packungen mit größerem Volumen von der Vorderseite einfach mit einer Hand greifen zu können. Unter einem Trapez wird allgemein ein Viereck verstanden, bei dem zwei Seiten parallel zueinander liegen. Unter trapezförmigen Vierecken sollen hier auch Vierecke mit gekrümmten Seiten verstanden werden, sofern bei einer Verbindung der vier Ecken durch (fiktive) Geraden zwei dieser Geraden parallel zueinander liegen.

Nach einer Ausgestaltung des flächenförmigen Verbundmaterials ist vorgesehen, dass die viereckige Giebelfläche eine an die vordere Fläche angrenzende Vorderkante aufweist, die gekrümmt ist. Vorzugsweise ist die Vorderkante der Giebelfläche von der Giebelfläche gesehen in Richtung der vorderen Fläche gekrümmt. Auf diese Weise kann die Giebelfläche vergrößert werden, was beispielsweise die Anbringung von Ausgießelementen mit größerem Durchmesser erleichtert. Eine gekrümmte Vorderkante des Giebels beeinflusst auch die Form der vorderen Fläche des Verbundmaterials und somit auch die Form der Vorderseite einer aus dem Verbundmaterial hergestellten Packung. Insbesondere lässt sich durch eine in Richtung der vorderen Fläche gekrümmte Vorderkante eine nach außen gewölbte (konvexe) Vorderseite ("Frontpaneel") der Packung erreichen. Auch dies hat neben einer ansprechenden Optik den bereits zuvor beschriebenen technischen Vorteil einer verbesserten Luftzirkulation zwischen benachbart angeordneten Packungen, was die Gefahr von Schimmelbildung verringert.

Eine weitere Ausgestaltung des flächenförmigen Verbundmaterials ist gekennzeichnet durch zwei Scheinfaltlinien, die parallel zueinander durch die Mantelfläche verlaufen. Unter Scheinfaltlinien werden Faltlinien verstanden, die im Gegensatz zu gewöhnlichen Faltlinien später keine Kanten der Packung bilden, sondern zwischen den Kanten der Packung angeordnet sind, beispielsweise in den Seitenflächen. Scheinfaltlinien dienen dazu, aus dem Verbundmaterial einen Packungsmantel zu erzeugen, der vorzugsweise entlang von zwei Scheinfaltlinien flach zusammengefaltet ist, um möglichst platzsparend gestapelt und transportiert werden zu können.

Gemäß einer weiteren Ausgestaltung des flächenförmigen Verbundmaterials ist vorgesehen, dass die Mantelfläche wenigstens eine Entlastungsfläche aufweist, die zwischen der vorderen Fläche und einer der beiden Seitenflächen angeordnet ist. Die Entlastungsfläche dient dazu, einen möglichst fließenden Übergang zwischen der vorderen Fläche und der Seitenfläche herzustellen. Vorzugsweise erstreckt sich die Entlastungsfläche über die gesamte Höhe der Mantelfläche, also von den Bodenflächen bis zu den Giebelflächen und trennt daher die vordere Fläche von den beiden Seitenflächen. Der technische Effekt der Entlastungsflächen liegt darin, dass das Verbundmaterial im Vergleich zu einer 90°-Kante einer quaderförmigen Packung weniger stark gefaltet bzw. geknickt werden braucht, da der Übergang von der vorderen Fläche zu den beiden Seitenflächen durch zwei weniger stark geknickte ("stumpfere") Kanten erfolgt. Dies führt zu weniger starken Belastungen des Verbundmaterials und insbesondere zu einer geringeren Gefahr von gerissenen bzw. gebrochenen Fasern in der faserhaltigen Trägerschicht (Papier- oder Pappschicht) des Verbundmaterials. Vorzugsweise weist die Mantelfläche zwei Entlastungsflächen auf, die zwischen der vorderen Fläche und jeweils einer der beiden Seitenflächen angeordnet sind. Durch die Entlastungsflächen wird zudem erreicht, dass zwischen nebeneinander angeordneten Packungen - im Gegensatz zu quaderförmigen Packungen - im Bereich der Entlastungsflächen ein Spalt bzw. Freiraum zwischen benachbarten Packungen entsteht, durch den Luft zirkulieren kann. Dies hat den Vorteil einer Verringerten Gefahr von Schimmelbildung infolge von Feuchtigkeit. Ein weiterer Vorteil von Entlastungsflächen kann darin gesehen werden, dass die an die Entlastungsflächen angrenzenden Flächen schmaler und somit stabiler ausgebildet werden können, wodurch eine erhöhte Griffsteifigkeit beim Ausgießen der gefüllten Packung erreicht werden kann.

Nach einer weiteren Ausbildung des flächenförmigen Verbundmaterials ist vorgesehen, dass wenigstens eine Entlastungsfläche im Bereich der Bodenflächen an eine viereckige Bodenfläche angrenzt und im Bereich der Giebelflächen an eine dreieckige Giebelfläche angrenzt. Die Dreiecksflächen im Boden- und Giebelbereich sind typischerweise den Seitenflächen eines flächenförmigen Verbundmaterials zugeordnet und grenzen daher an die Seitenflächen der daraus hergestellten Packung an. Die Vierecksflächen im Boden- und Giebelbereich sind hingegen typischerweise der vorderen Fläche und der hinteren Fläche eines flächenförmigen Verbundmaterials zugeordnet und grenzen daher an die Vorderseite und die Rückseite der daraus hergestellten Packung an. Indem die Entlastungsfläche im Bodenbereich an eine andere Fläche angrenzt als im Giebelbereich, wird erreicht, dass die Entlastungsfläche in ihrem unteren Bereich der Vorderseite der Packung zuzuordnen ist, während sie in ihrem oberen Bereich der Seite der Packung zuzuordnen ist. Die Entlastungsfläche "windet" sich daher um eine (gedachte) vertikal verlaufende Kante der Packung herum. Diese Gestaltung der Entlastungsflächen hat den Vorteil, dass die bereits zuvor beschriebenen technischen Effekte (verringerte Belastung des Verbundmaterials, verbesserte Luftzirkulation) nicht nur an einer Seite der Packung, sondern an zwei Seiten der Packung auftreten. Alternativ oder zusätzlich hierzu kann vorgesehen sein, dass wenigstens eine Entlastungsfläche im Bereich der Bodenflächen an eine dreieckige Bodenfläche angrenzt und im Bereich der Giebelflächen an eine viereckige Giebelfläche angrenzt. Vorzugsweise berühren sich die aneinander angrenzenden Flächen nicht lediglich in einem Punkt, sondern grenzen linienförmig - also entlang einer Strecke - aneinander an.

Gemäß einer weiteren Ausgestaltung des flächenförmigen Verbundmaterials ist vorgesehen, dass zwischen wenigstens einer Entlastungsfläche und der daran angrenzenden vorderen Fläche eine erste Mantelfaltlinie vorgesehen ist, die vorzugsweise wenigstens abschnittsweise gekrümmt ist. Indem zwischen der Entlastungsfläche und der vorderen Fläche eine Faltlinie vorgesehen ist, wird eine Faltkante mit einem definierten Verlauf erreicht, was die Herstellung der Packung erleichtert. Die Faltkante verbessert zudem im Vergleich zu einer kantenfrei gekrümmten Form die strukturellen Eigenschaften der Packung, insbesondere die Steifigkeit. Durch den gekrümmten Verlauf der Mantelfaltlinie ist es außerdem einfacher möglich, konvexe oder konkave Flächen zu erzeugen, wodurch Luftspalte zwischen benachbarten Packungen entstehen, die die Luftzirkulation verbessern. Es kann vorgesehen sein, dass zwischen beiden Entlastungsflächen und der daran angrenzenden vorderen Fläche jeweils eine erste Mantelfaltlinie vorgesehen ist, die vorzugsweise wenigstens abschnittsweise gekrümmt ist. Es kann zudem vorgesehen sein, dass die erste Mantelfaltlinie durchgehend gekrümmt verläuft.

Nach einer weiteren Ausbildung des flächenförmigen Verbundmaterials ist vorgesehen, dass zwischen wenigstens einer Entlastungsfläche und der daran angrenzenden Seitenfläche eine zweite Mantelfaltlinie vorgesehen ist, die vorzugsweise wenigstens abschnittsweise gekrümmt ist. Wie bereits zuvor im Zusammenhang mit der ersten Mantelfaltlinie erläutert wurde, wird auch durch die zweite Mantelfaltlinie eine Faltkante mit einem definierten Verlauf erreicht, was die Herstellung der Packung erleichtert. Die Faltkante verbessert zudem im Vergleich zu einer kantenfrei gekrümmten Form die strukturellen Eigenschaften der Packung, insbesondere die Steifigkeit. Durch den gekrümmten Verlauf der Mantelfaltlinie ist es außerdem einfacher möglich, konvexe oder konkave Flächen zu erzeugen, wodurch Luftspalte zwischen benachbarten Packungen entstehen, die die Luftzirkulation verbessern. Es kann vorgesehen sein, dass zwischen beiden Entlastungsflächen und den daran angrenzenden Seitenflächen jeweils eine zweite Mantelfaltlinie vorgesehen ist, die vorzugsweise wenigstens abschnittsweise gekrümmt ist. Es kann zudem vorgesehen sein, dass die zweite Mantelfaltlinie durchgehend gekrümmt verläuft.

Bei einer weiteren Ausgestaltung des flächenförmigen Verbundmaterials ist vorgesehen, dass zwischen wenigstens einer Seitenfläche und der daran angrenzenden hinteren Fläche eine dritte Mantelfaltlinie vorgesehen ist, die vorzugsweise wenigstens abschnittsweise gekrümmt ist. Wie bereits zuvor im Zusammenhang mit der ersten und der zweiten Mantelfaltlinie erläutert wurde, wird auch durch die dritte Mantelfaltlinie eine Faltkante mit einem definierten Verlauf erreicht, was die Herstellung der Packung erleichtert. Die Faltkante verbessert zudem im Vergleich zu einer kantenfrei gekrümmten Form die strukturellen Eigenschaften der Packung, insbesondere die Steifigkeit. Durch den gekrümmten Verlauf der Mantelfaltlinie ist es außerdem einfacher möglich, konvexe oder konkave Flächen zu erzeugen, wodurch Luftspalte zwischen benachbarten Packungen entstehen, die die Luftzirkulation verbessern. Es kann vorgesehen sein, dass zwischen beiden Seitenflächen und den daran angrenzenden hinteren Flächen jeweils eine dritte Mantelfaltlinie vorgesehen ist, die vorzugsweise wenigstens abschnittsweise gekrümmt ist. Es kann zudem vorgesehen sein, dass die dritte Mantelfaltlinie durchgehend gekrümmt verläuft.

Im Hinblick auf diese Ausgestaltung wird weiter vorgeschlagen, dass die dritte Mantelfaltlinie mehrere Abschnitte aufweist, von denen wenigstens ein Abschnitt gekrümmt ist und von denen wenigstens ein Abschnitt gerade ist. Indem bei der dritten Mantelfaltlinie neben gekrümmten Abschnitten auch gerade Abschnitt vorgesehen sind, wird die Herstellung der Packung erleichtert.

Nach einer weiteren Ausbildung ist vorgesehen, dass die dritte Mantelfaltlinie mehrere Abschnitte aufweist, von denen der an die Bodenflächen angrenzende Abschnitt und der an die Giebelflächen angrenzende Abschnitt gerade sind. Der Einsatz gerader Abschnitte ist angrenzend an die Bodenflächen und angrenzend an die Giebelflächen besonders vorteilhaft, da auf diese Weise die Verwendung einfacherer Werkzeuge zur Herstellung der Böden und Giebel der Packungen möglich ist.

Gemäß einer weiteren Ausgestaltung ist vorgesehen, dass die dritte Mantelfaltlinie mehrere Abschnitte aufweist, von denen wenigstens zwei Abschnitte entgegengesetzte Krümmungsrichtungen aufweisen. Insbesondere kann vorgesehen sein, dass ein Abschnitt in Richtung der hinteren Fläche gekrümmt ist und dass ein Abschnitt in Richtung der Seitenfläche gekrümmt ist. Auf diese Weise kann eine Packung erreicht werden, die sowohl konvexe als auch konkave Flächen aufweist. Vorzugsweise ist der in Richtung der Seitenfläche gekrümmte Abschnitt der dritten Mantelfaltlinie oberhalb von dem in Richtung der hinteren Fläche gekrümmten Abschnitt der dritten Mantelfaltlinie angeordnet. Dies führt im oberen Bereich - insbesondere in der oberen Hälfte - der Packung zu einer breiten, konkaven Rückseite der Packung. Da die Packungen vorzugsweise in ihrem oberen Bereich - insbesondere in der oberen Hälfte - eine schmale, konvexe Vorderseite aufweisen, können mehrere Packungen platzsparend vor- bzw. hintereinander gestellt werden, so dass eine gute Platzausnutzung erreicht wird. Zudem kann durch entgegengesetzte Krümmungsrichtungen erreicht werden, dass das durch die eine Krümmungsrichtung verringerte Füllvolumen durch die andere Krümmungsrichtung wieder ausgeglichen wird, so dass die Packungshöhe für ein gegebenes Packungsvolumen unverändert bleiben kann.

Nach einer weiteren Ausbildung des flächenförmigen Verbundmaterials ist vorgesehen, dass die faserhaltige Trägerschicht des Verbundmaterials eine Hauptfaserrichtung aufweist, die etwa rechtwinklig zu einer von den Bodenflächen zu den Giebelflächen verlaufenden Längskante des Verbundmaterials verläuft. Papier und Pappe sind Materialien, die aus Zellstofffasern hergestellt sind. Während die Fasern bei traditioneller (manueller) Papierherstellung gleichmäßig in alle Richtungen verteilt liegen, kann bei einer maschinellen Papierherstellung eine gezielte Ausrichtung der Fasern erreicht werden. Da das Papier in Richtung der Fasern andere mechanischen Eigenschaften aufweist als quer zur Faserrichtung (Anisotropie), kann die Ausrichtung der Fasern genutzt werden, um die für den jeweiligen Anwendungsfall optimalen Materialeigenschaften zu erhalten. Die Hauptfaserrichtung soll etwa rechtwinklig zu den beiden Längskanten des Verbundmaterials verlaufen. Da die Längskanten von dem Bodenbereich zum Giebelbereich verlaufen (also bei der Packung in senkrechter Richtung), bedeutet dies, dass die Hauptfaserrichtung bei der Packung in Umfangsrichtung der Packung verläuft, also um die Mantelfläche herum verläuft. Dies hat den Vorteil, dass beim Rillen der Packungslängskanten (die quer zur Faserrichtung verlaufen) die Kartonfasern gebrochen werden. Dies führt beim anschließenden Falten und Umformen zu einer Packung mit scharf ausgeprägten Packungskanten und damit zu einer verbesserten Packungsstabilität. Insbesondere bei einer Stauchbelastung der Packungen (z.B. beim mehrlagigen Stapeln auf einer Palette) zeigt sich im Vergleich zu Packungen mit in Längsrichtung ausgerichteten Fasern ein deutlicher Stabilitätsgewinn, da die Packungen erst bei höheren Stauchbelastungen einknicken.

Die eingangs beschriebene Aufgabe wird auch gelöst durch einen Packungsmantel aus einem Verbundmaterial zur Herstellung einer Packung. Der Packungsmantel umfasst eine Mantelfläche, wobei die Mantelfläche eine vordere Fläche, eine erste Seitenfläche, eine zweite Seitenfläche, eine erste hintere Fläche und eine zweite hintere Fläche umfasst, Bodenflächen, wobei die Bodenflächen dreieckige Bodenflächen und viereckige Bodenflächen umfassen, Giebelflächen, wobei die Giebelflächen dreieckige Giebelflächen und viereckige Giebelflächen umfassen, zwei Scheinfaltlinien, die parallel zueinander durch die Mantelfläche verlaufen, und eine Längsnaht, die zwei Randbereiche des Verbundmaterials zu einem umlaufenden Packungsmantel verbindet, der sowohl im Bereich der Bodenflächen als auch im Bereich der Giebelflächen offen ist, wobei die Bodenflächen und die Giebelflächen auf gegenüberliegenden Seiten der Mantelfläche angeordnet sind, und wobei der Packungsmantel entlang von beiden Scheinfaltlinien gefaltet ist. Im Hinblick auf diejenigen Eigenschaften des Packungsmantels, die bereits bei dem flächenförmigen Verbundmaterial vorhanden sind, wird auf die diesbezüglichen Ausführungen verwiesen. Der Packungsmantel weist eine Längsnaht auf, die zwei Randbereiche des Verbundmaterials zu einem umlaufenden Packungsmantel verbindet. Durch die Längsnaht kann aus einem flachen - meist rechteckigen - Zuschnitt des Verbundmaterials ein in Umfangsrichtung geschlossener, umlaufender Packungsmantel hergestellt werden. Die Längsnaht kann beispielsweise durch Verkleben und/oder Verschweißen erzeugt werden. Aufgrund der Längsnaht werden derartige Packungsmäntel auch als längsnahtgesiegelte Packungsmäntel bezeichnet. Der Packungsmantel ist entlang von beiden Scheinfaltlinien gefaltet, wodurch sich eine Vorderseite und eine Rückseite - ebenso wie eine Innenseite und eine Außenseite ergibt.

Erfindungsgemäß zeichnet sich der Packungsmantel aus durch wenigstens eine viereckige Giebelfläche mit zwei kleinen Giebelflächenwinkeln, die kleiner sind als 90°, mit zwei großen Giebelflächenwinkeln, die größer sind als 90° und mit einer Winkelsumme, die größer ist als 360°. Durch diese Gestaltung des Giebels wird eine Giebelfläche erreicht, deren Form von einer rechteckigen oder quadratischen Form abweicht. Die damit verbundenen Eigenschaften und Vorteile wurden bereits im Zusammenhang mit Patentanspruch 1 erläutert und sind von dem flächenförmigen Verbundmaterial in entsprechender Weise auf den Packungsmantel übertragbar.

Nach einer Ausgestaltung des Packungsmantels ist vorgesehen, dass der Packungsmantel aus einem flächenförmigen Verbundmaterial nach einem der Ansprüche 1 bis 13 hergestellt ist. Da der Packungsmantel aus einem der zuvor beschriebenen flächenförmigen Verbundmaterialien hergestellt ist, treten viele Eigenschaften und Vorteile des flächenförmigen Verbundmaterials auch bei dem Packungsmantel auf, so dass auf die diesbezüglichen Ausführungen verwiesen wird.

Gemäß einer weiteren Ausbildung des Packungsmantels ist vorgesehen, dass das Verbundmaterial wenigstens eine Schicht aus Papier oder Pappe aufweist, die an der innerhalb des Packungsmantels verlaufenden Kante der Längsnaht abgedeckt ist. Bei der Schicht aus Papier oder Pappe handelt es sich vorzugsweise um die Trägerschicht. Die Abdeckung der Papierschicht bzw. Pappschicht hat den Zweck, einen Kontakt zwischen dem Inhalt der Packung und dieser Schicht zu vermeiden. Dies dient einerseits dazu, ein Austreten von Flüssigkeit durch die - nicht flüssigkeitsdichte - Papierschicht bzw. Pappschicht zu vermeiden und andererseits dazu, den Inhalt der Packung von Verunreinigungen durch die Papierschicht bzw. Pappschicht zu schützen (z.B. Fasern des Zellstoffs).

Zu dieser Ausgestaltung wird weiter vorgeschlagen, dass die Schicht aus Papier oder Pappe durch einen Dichtstreifen und/oder durch Umlegen des Verbundmaterials im Bereich der Längsnaht abgedeckt ist. Eine Möglichkeit der Abdeckung ist die Befestigung eines separaten Dichtstreifens. Der Dichtstreifen kann beispielsweise aus demselben Material hergestellt sein wie die innerste Lage des Verbundmaterials und mit dieser Lager verklebt oder verschweißt werden. Eine andere Möglichkeit der Abdeckung besteht darin, das Verbundmaterial im Bereich der Längsnaht umzulegen bzw. umzuklappen. Auf diese Weise treten an der innerhalb des Packungsmantels verlaufenden Kante der Längsnaht nicht mehr alle Lagen, sondern nur noch die innerste Lage des Verbundmaterials zum Vorschein. Die innerste Lage muss jedoch ohnehin aus einem Material hergestellt sein, dass für den Kontakt mit dem Inhalt der Packung geeignet ist.

Bei einer weiteren Ausbildung des Packungsmantels ist das Verbundmaterial im Bereich der Längsnaht geschält. Unter einem "geschälten" Verbundmaterial wird ein Verbundmaterial verstanden, das in dem geschälten Bereich weniger Lagen aufweist als in den übrigen Bereichen. Die Schälung hat insbesondere im Bereich von Überlappungen mehrerer Materiallagen den Vorteil einer weniger starken Dickenzunahme. Besonders vorteilhaft ist daher der Einsatz von geschältem Verbundmaterial, wenn das Verbundmaterial umgelegt oder umgeklappt wird - beispielsweise im Bereich der Längsnaht.

Die eingangs beschriebene Aufgabe wird auch gelöst durch eine Packung aus einem Verbundmaterial, wobei die Packung aus einem flächenförmigen Verbundmaterial nach dem Oberbegriff von Patentanspruch 1 hergestellt ist, oder wobei die Packung aus einem Packungsmantel nach dem Oberbegriff von Patentanspruch 14 hergestellt ist, und wobei die Packung im Bereich der Bodenflächen und im Bereich der Giebelflächen verschlossen ist. Die Packung zeichnet sich aus durch wenigstens eine viereckige Giebelfläche mit zwei kleinen Giebelflächenwinkeln, die kleiner sind als 90°, mit zwei großen Giebelflächenwinkeln, die größer sind als 90° und mit einer Winkelsumme, die größer ist als 360°. Durch diese Gestaltung des Giebels wird eine Giebelfläche erreicht, deren Form von einer rechteckigen oder quadratischen Form abweicht. Die damit verbundenen Eigenschaften und Vorteile wurden bereits zuvor erläutert und sind von dem Verbundmaterial und dem Packungsmantel in entsprechender Weise auf die Packung übertragbar. Die Packung kann entweder direkt aus einem flächenförmigen Verbundmaterial hergestellt werden oder sie kann aus einem Packungsmantel hergestellt werden, der zuvor aus einem flächenförmigen Verbundmaterial hergestellt worden ist.

Nach einer Ausgestaltung der Packung ist vorgesehen, dass die Packung im Bereich des Giebels eine Flossennaht aufweist, die in Richtung der vorderen Fläche umgelegt ist. Diese Gestaltung ermöglicht bei einem nach vorne abfallenden Schräggiebel beispielsweise ein besseres Ablaufen von Feuchtigkeit von der Giebelfläche, da sich keine nach oben offene "Tasche" bildet, in der sich Feuchtigkeit sammeln könnte. Ebenso kann durch diese Ausgestaltung mehr Platz für einen von Innen eingesiegelten Ausgießer erreicht werden.

Gemäß einer weiteren Ausbildung der Packung ist vorgesehen, dass die Packung einen Giebel aufweist, der etwa trapezförmig ist. Die Trapezform des Giebels hat den Vorteil, dass eine der beiden parallelen Seiten bzw. Kanten (vorzugsweise die vordere Kante des Giebels) kürzer ist als die gegenüberliegende Seite bzw. Kante (vorzugsweise die hintere Kante des Giebels) - im Gegensatz zu einer Raute, bei der die gegenüberliegenden Seiten gleich lang sind. Dies ermöglicht es, auch Packungen mit größerem Volumen von der Vorderseite einfach mit einer Hand greifen zu können.

Eine weitere Ausgestaltung der Packung sieht vor, dass die Packung einen Schräggiebel aufweist. Insbesondere kann vorgesehen sein, dass der Giebel der Packung nach vorne abfällt, also im Bereich der Vorderseite der Packung niedriger ist als im Bereich der Rückseite der Packung. Durch den schrägen Verlauf des Giebels kann erreicht werden, dass ein im Bereich des Giebels angeordnetes Ausgießelement die Stapelung von Packungen weniger beeinträchtigt als bei Packungen mit ebenem Giebel. Dies liegt darin begründet, dass das Ausgießelement bei Packungen mit schrägem Giebel - anders als bei Packungen mit ebenem Giebel - nicht zwangsläufig den höchsten Punkt der Packung bildet. Zudem kann ein besseres Ablaufen von Feuchtigkeit von der Giebelfläche erreicht werden.

Nach einer weiteren Ausbildung der Packung ist vorgesehen, dass die Packung im Bereich der vorderen Fläche konvex geformt ist und/oder im Bereich der hinteren Flächen konkav geformt ist. Insbesondere kann vorgesehen sein, dass die Packung in dem oberen Bereich - insbesondere in der oberen Hälfte - im Bereich der vorderen Fläche konvex geformt ist und/oder in dem oberen Bereich - insbesondere in der oberen Hälfte - im Bereich der hinteren Flächen konkav geformt ist. Durch die Kombination aus konvexer Vorderseite und konkaver Rückseite können die Packungen trotz optisch aufwendiger Gestaltung platzsparend vor- oder hintereinander angeordnet werden.

Gemäß einer weiteren Ausgestaltung der Packung ist schließlich vorgesehen, dass die Packung eine Entlastungsfläche aufweist, die abschnittsweise mit der vorderen Fläche in einer Ebene liegt und die abschnittsweise mit einer Seitenfläche in einer Ebene liegt. Wie bereits zuvor im Zusammenhang mit dem flächenförmigen Verbundmaterial beschrieben wurde, hat diese Ausgestaltung zur Folge, dass sich die Entlastungsfläche von einer Seite der Packung (z.B. der Vorderseite) um eine (fiktive) Kante herum in Richtung einer anderen Seite der Packung windet. Die Entlastungsfläche dient also dazu, einen möglichst fließenden Übergang zwischen der vorderen Fläche und der Seitenfläche herzustellen. Vorzugsweise erstreckt sich die Entlastungsfläche über die gesamte Höhe der Mantelfläche, also von den Bodenflächen bis zu den Giebelflächen und trennt daher die vordere Fläche von den beiden Seitenflächen. Der technische Effekt der Entlastungsflächen liegt darin, dass das Verbundmaterial im Vergleich zu einer 90°-Kante einer quaderförmigen Packung weniger stark gefaltet bzw. geknickt werden braucht, da der Übergang von der vorderen Fläche zu den beiden Seitenflächen durch zwei weniger stark geknickte ("stumpfere") Kanten erfolgt. Dies führt zu weniger starken Belastungen des Verbundmaterials und insbesondere zu einer geringeren Gefahr von gerissenen bzw. gebrochenen Fasern in der Papier- oder Pappschicht des Verbundmaterials.

Die Erfindung wird nachfolgend anhand einer lediglich ein bevorzugtes Ausführungsbeispiel darstellenden Zeichnung näher erläutert. In der Zeichnung zeigen:
- Fig. 1A:: ein aus dem Stand der Technik bekanntes flächenförmiges Verbundmaterial zum Falten eines Packungsmantels in einer Draufsicht,
- Fig. 1B:: einen aus dem Stand der Technik bekannten Packungsmantel, der aus dem in Fig. 1A gezeigten flächenförmigen Verbundmaterial gebildet ist, in einer Vorderansicht,
- Fig. 1C:: den Packungsmantel aus Fig. 1B in einer Rückansicht,
- Fig. 1D:: den Packungsmantel aus Fig. 1B und Fig. 1C im aufgefalteten Zustand,
- Fig. 1E:: den Packungsmantel aus Fig. 1D mit verschlossenem Boden,
- Fig. 1F:: eine Packung, die aus dem in Fig. 1B gezeigten Packungsmantel gebildet ist, nach dem Verschweißen,
- Fig. 1G:: die Packung aus Fig. 1F mit angelegten Ohren,
- Fig. 2A:: ein erfindungsgemäßes flächenförmiges Verbundmaterial zum Falten eines Packungsmantels in einer Draufsicht,
- Fig. 2B:: einen ersten Bereich des flächenförmigen Verbundmaterials aus Fig. 2A in vergrößerter Ansicht,

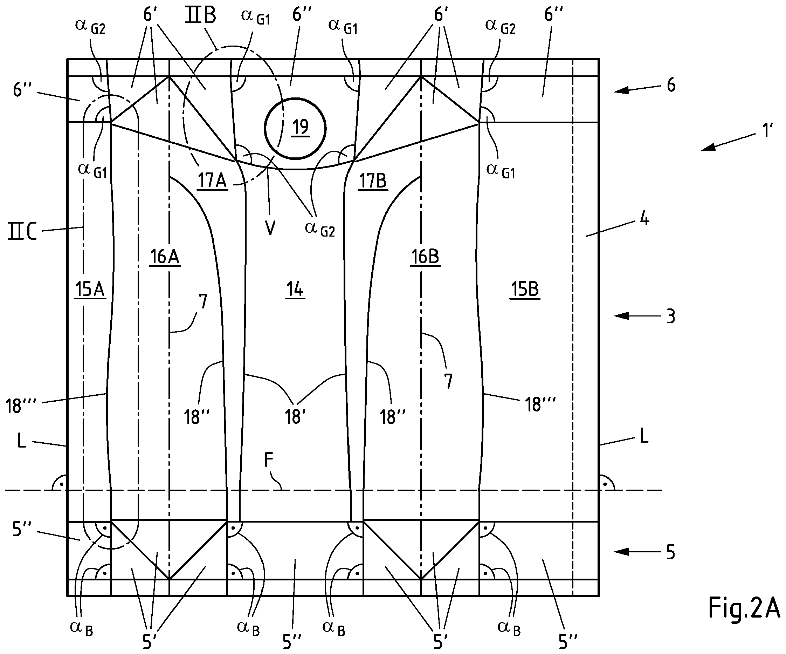

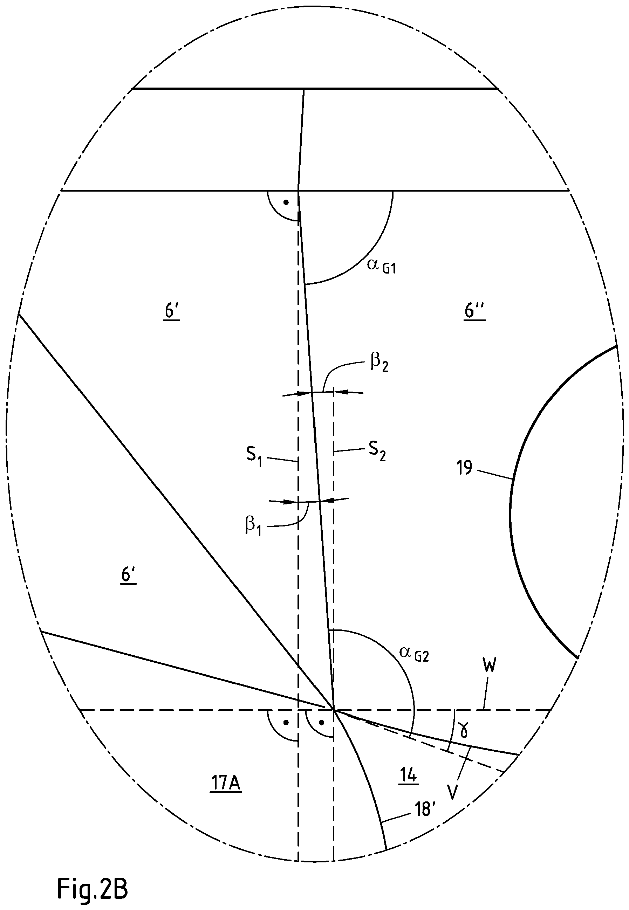

- Fig. 2B:: einen zweiten Bereich des flächenförmigen Verbundmaterials aus Fig. 2A in vergrößerter Ansicht,

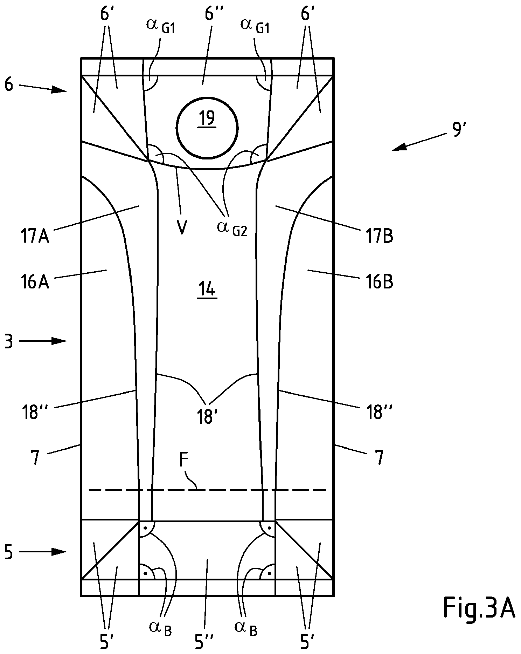

- Fig. 3A:: einen erfindungsgemäßen Packungsmantel, der aus dem in Fig. 2A gezeigten flächenförmigen Verbundmaterial gebildet ist, in einer Vorderansicht,

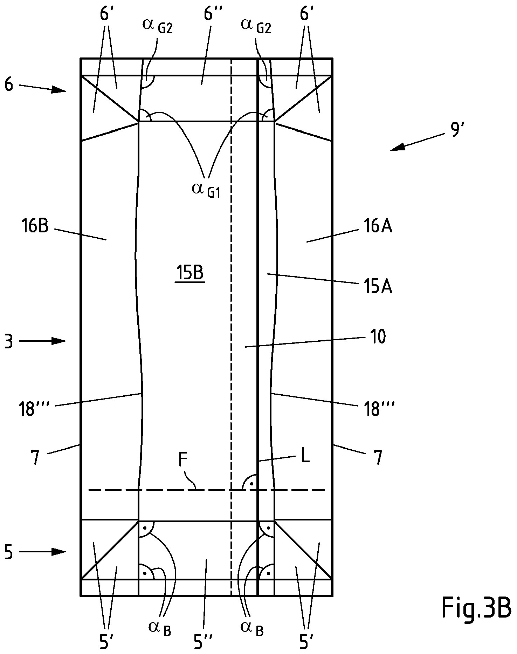

- Fig. 3B:: den Packungsmantel aus Fig. 3A in einer Rückansicht,

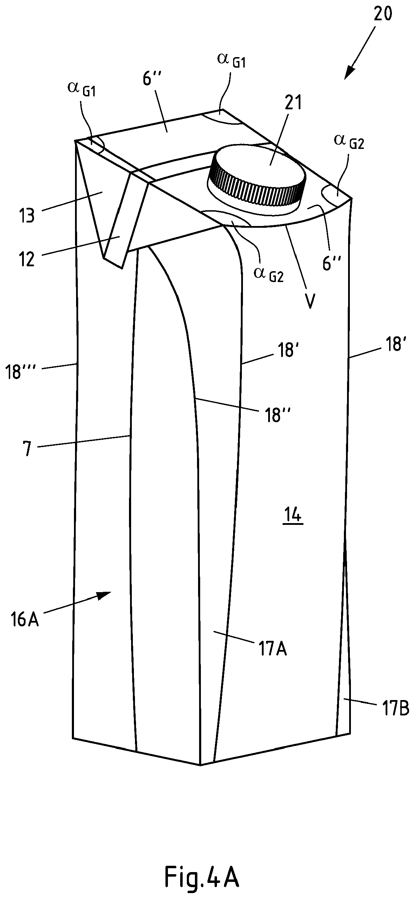

- Fig. 4A:: eine erfindungsgemäße Packung, die aus dem in Fig. 3 gezeigten Packungsmantel gebildet ist, in perspektivischer Ansicht,

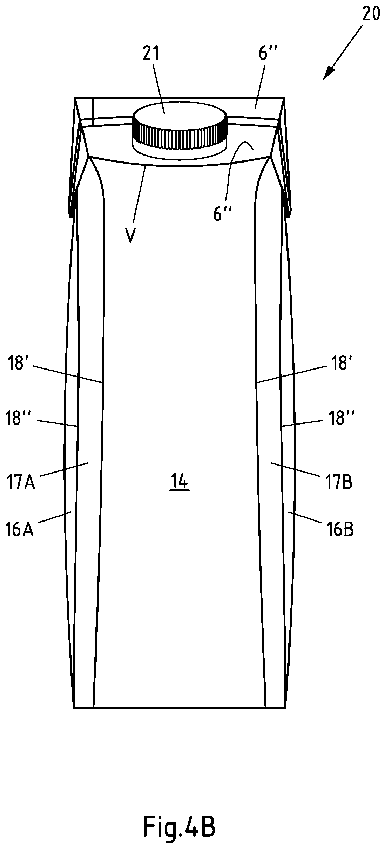

- Fig. 4B:: die Packung aus Fig. 4A in einer Vorderansicht,

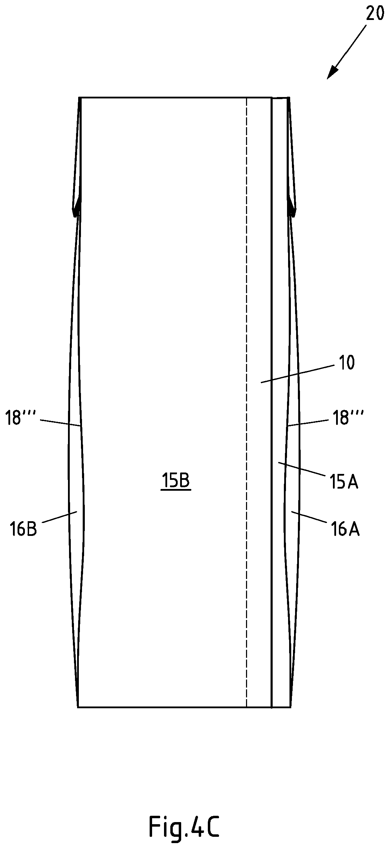

- Fig. 4C:: die Packung aus Fig. 4A in einer Rückansicht, und

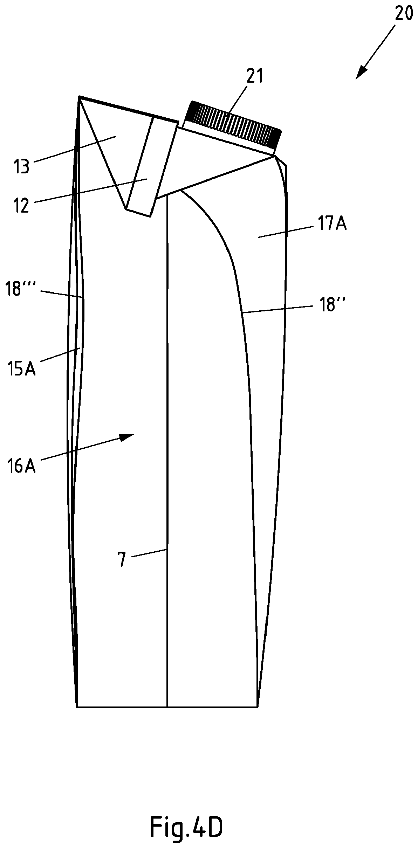

- Fig. 4D:: die Packung aus Fig. 4A in einer Seitenansicht.

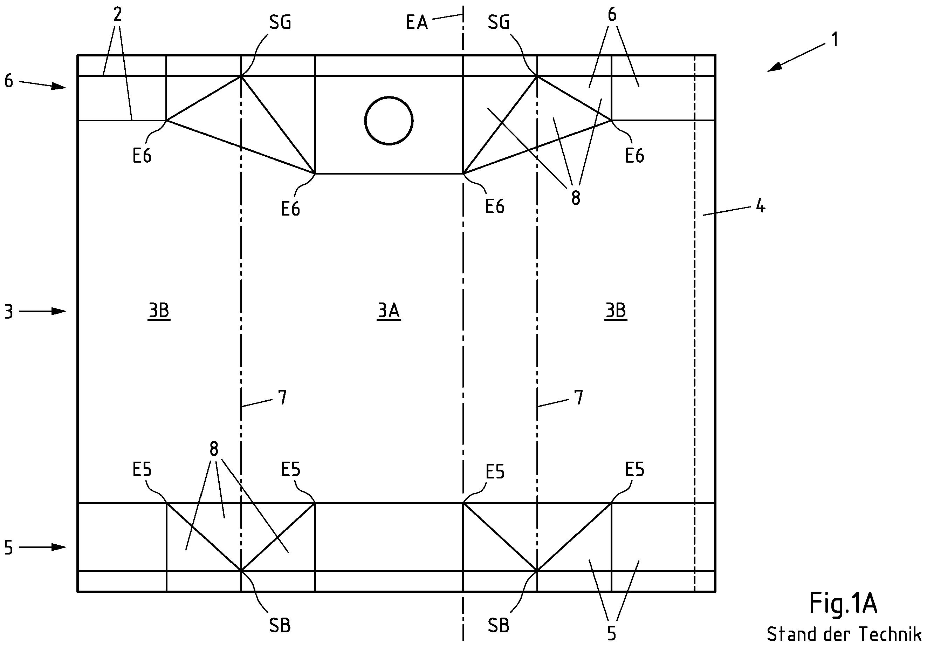

Fig. 1A zeigt ein aus dem Stand der Technik bekanntes flächenförmiges Verbundmaterial 1, aus dem ein Packungsmantel gebildet werden kann, in einer Draufsicht. Das flächenförmige Verbundmaterial 1 kann mehrere Lagen unterschiedlicher Materialien umfassen, beispielsweise Papier, Pappe, Kunststoff oder Metall, insbesondere Aluminium. Das Verbundmaterial 1 weist mehrere Faltlinien 2 auf, die das Falten des Verbundmaterial 1 erleichtern sollen und das Verbundmaterial 1 in mehrere Flächen aufteilen. Das Verbundmaterial 1 kann in eine Mantelfläche 3, eine Siegelfläche 4, Bodenflächen 5 und Giebelflächen 6 unterteilt werden. Aus dem Verbundmaterial 1 kann ein Packungsmantel gebildet werden, indem das Verbundmaterial 1 derart gefaltet wird, dass die Siegelfläche 4 mit dem gegenüberliegenden Randbereich der Mantelfläche 3 verbunden, insbesondere verschweißt wird. Die Mantelfläche 3 erstreckt sich - abgesehen von der Siegelfläche 4 - über die gesamte Breite des Verbundmaterials 1. Das Verbundmaterial 1 weist im Bereich der Mantelfläche 3 zwei Scheinfaltlinien 7 auf. Die beiden Scheinfaltlinien 7 sind gerade und verlaufen parallel zueinander. Zudem verlaufen die Scheinfaltlinien 7 durch einen Berührungspunkt SB von drei benachbarten Dreiecksflächen 8 der Bodenfläche 5 und durch einen Berührungspunkt SG von drei benachbarten Dreiecksflächen 8 der Giebelflächen 6. Durch die Scheinfaltlinien 7 wird die Mantenfläche 3 in einen inneren Teilbereich 3A und in zwei äußere Teilbereiche 3B geteilt. Der innere Teilbereich 3A liegt zwischen beiden Scheinfaltlinien 7 und die äußeren Teilbereiche 3B liegen neben bzw. außerhalb der beiden Scheinfaltlinien 7.

Die Bodenflächen 5 weisen vier Eckpunkte E5 auf und die Giebelflächen 6 weisen vier Eckpunkte E6 auf. Die Eckpunkte E5, E6 stellen Eckpunkte der aus dem Verbundmaterial 1 herzustellenden Packung dar. Jedem Eckpunkt E5 einer Bodenfläche 5 ist ein entsprechender Eckpunkt E6 einer Giebelfläche 6 zugeordnet, bei dem es sich jeweils um denjenigen Eckpunkt E6 handelt, der bei stehender Packung oberhalb dieses Eckpunktes E5 angeordnet ist. Durch zwei einander zugeordnete Eckpunkte E5, E6 verläuft eine Eckachse EA, die bei einer herkömmlichen quaderförmigen Packung einer vertikalen Packungskante entsprechen würde. Bei dem in Fig. 1A gezeigten Verbundmaterial 1 sind daher - ebenso wie bei dem daraus hergestellten Packungsmantel und der daraus hergestellten Packung - vier Eckachsen EA vorhanden (aus Gründen der Übersichtlichkeit ist stets nur eine Eckachse EA eingezeichnet). Zwischen den Eckpunkten E5 der Bodenflächen 5 und den ihnen zugeordneten Eckpunkten E6 der Giebelflächen 6 - also entlang der Eckachsen EA - sind keine Faltlinien vorgesehen.

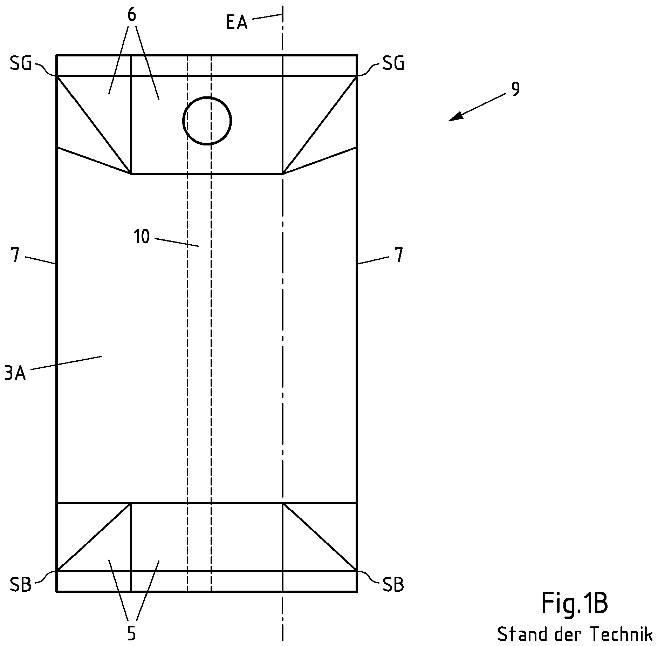

Fig. 1B zeigt einen aus dem Stand der Technik bekannten Packungsmantel 9, der aus dem in Fig. 1A gezeigten flächenförmigen Verbundmaterial 1 gebildet ist, in einer Vorderansicht. Die bereits im Zusammenhang mit Fig. 1A beschriebenen Bereiche des Packungsmantels 9 sind in Fig. 1B mit entsprechenden Bezugszeichen versehen. Der Packungsmantel 9 ist durch zwei Schritte aus dem Verbundmaterial 1 entstanden: Zunächst wird das Verbundmaterial 1 entlang der beiden Scheinfaltlinien 7 gefaltet. Anschließend werden die beiden Teilbereiche 3B (links) und 3B (rechts) der Mantelfläche 3 im Bereich der Siegelfläche 4 miteinander verbunden, insbesondere verschweißt, wodurch eine (in Fig. 1B verdeckte) Längsnaht 10 entsteht. Der Packungsmantel 9 hat also eine umlaufende, in Umfangsrichtung geschlossene Struktur mit einer Öffnung im Bereich der Bodenflächen 5 und mit einer Öffnung im Bereich der Giebelflächen 6. In der Vorderansicht ist der innere Teilbereich 3A der Mantelfläche 3 sichtbar, der beidseitig von den Scheinfaltlinien 7 begrenzt wird. Die übrigen Teilbereiche 3B der Mantelfläche 3 sind auf der Rückseite des Packungsmantels 9 und daher in Fig. 1B verdeckt.

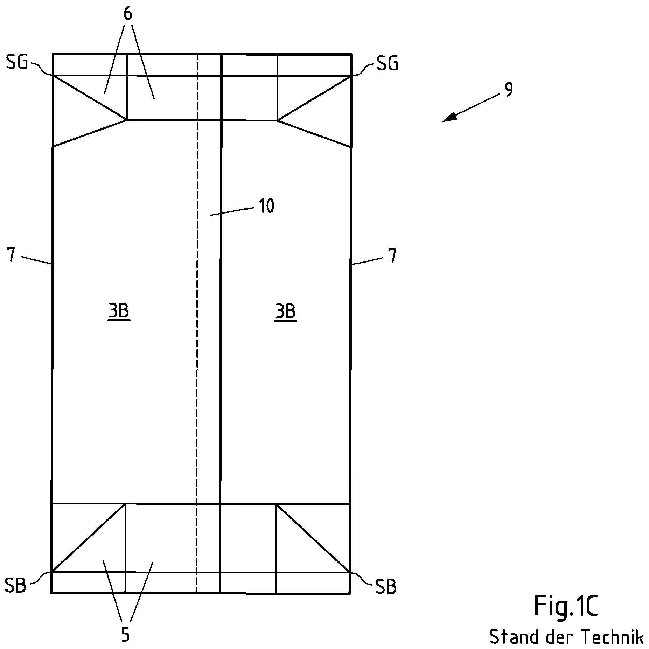

In Fig. 1C ist der Packungsmantel 9 aus Fig. 1B in einer Rückansicht dargestellt. Die bereits im Zusammenhang mit Fig. 1A und Fig. 1B beschriebenen Bereiche des Packungsmantels 9 sind in Fig. 1C mit entsprechenden Bezugszeichen versehen. In der Rückansicht sind die beiden äußeren Teilbereiche 3B der Mantelfläche 3 sichtbar, die durch die Längsnaht 10 miteinander verbunden sind und die beidseitig von den Scheinfaltlinien 7 begrenzt wird. Der innere Teilbereich 3A der Mantelfläche 3 ist auf der Vorderseite des Packungsmantels 9 und daher in Fig. 1C verdeckt.

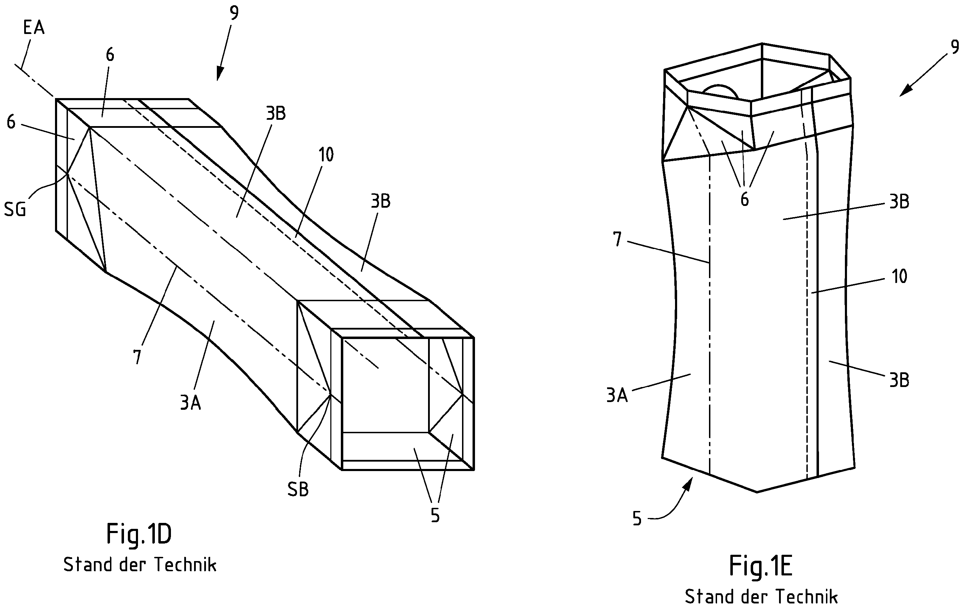

Fig. 1D zeigt den Packungsmantel 9 aus Fig. 1B und Fig. 1C im aufgefalteten Zustand. Die bereits im Zusammenhang mit Fig. 1A bis Fig. 1C beschriebenen Bereiche des Packungsmantels 9 sind in Fig. 1D mit entsprechenden Bezugszeichen versehen. Der aufgefaltete Zustand wird durch eine Rückfaltung des Packungsmantels 9 entlang der durch die Mantelfläche 3 verlaufenden Scheinfaltlinien 7 erreicht. Die Rückfaltung erfolgt um etwa 180°. Die Rückfaltung entlang der Scheinfaltlinien 7 hat zur Folge, dass die beiden an die Scheinfaltlinie 7 angrenzenden Teilbereiche 3A, 3B der Mantelfläche 3 nicht mehr aufeinander liegen, sondern in derselben Ebene angeordnet sind. Der Packungsmantel 9 ist daher nur in seinem flachen Zustand (Fig. 1B, Fig. 1C) entlang der Scheinfaltlinien 7 gefaltet; im aufgefalteten Zustand (Fig. 1D) ist der Packungsmantel 9 (ebenso wie die daraus herzustellende Packung) hingegen nicht mehr entlang der Scheinfaltlinien 7 gefaltet. Daher die Bezeichnung "Schein"-Faltlinien 7.

Fig. 1E zeigt den Packungsmantel 9 aus Fig. 1D mit verschlossenem Boden. Die bereits im Zusammenhang mit Fig. 1A bis Fig. 1D beschriebenen Bereiche des Packungsmantels 9 sind in Fig. 1E mit entsprechenden Bezugszeichen versehen. Der vorgefaltete Zustand bezeichnet (wie in Fig. 1D) einen Zustand, in dem die Faltlinien 2 im Bereich der Giebelflächen 6 vorgefaltet worden sind. Die Bodenflächen 5 sind hingegen bereits vollständig gefaltet und verschweißt, so dass der Packungsmantel 9 einen verschlossenen Boden aufweist.

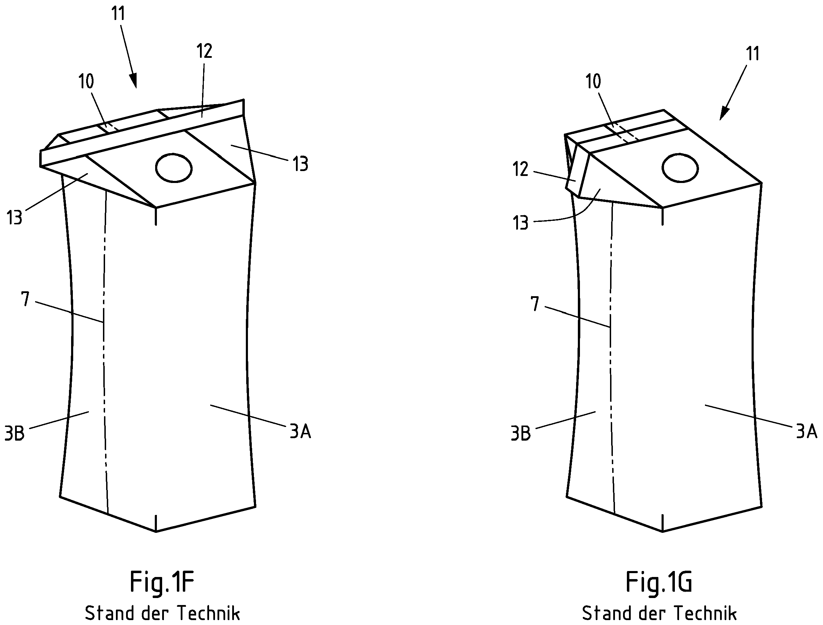

Fig. 1F zeigt eine Packung 11, die aus dem in Fig. 1B gezeigten Packungsmantel 9 gebildet ist, nach dem Verschweißen. Die bereits im Zusammenhang mit Fig. 1A bis Fig. 1E beschriebenen Bereiche der Packung 11 sind in Fig. 1F mit entsprechenden Bezugszeichen versehen. Die Packung 11 ist nach dem Verschweißen, also im befüllten und verschlossenen Zustand gezeigt. Im Bereich der Bodenflächen 5 und im Bereich der Giebelflächen 6 entsteht nach dem Verschließen eine Flossennaht 12. Während die Flossennaht 12 im Bereich der Bodenflächen 5 bereits an die Packung 11 angelegt worden ist, steht die Flossennaht 12 im Bereich der Giebelflächen 6 noch von der Packung 11 ab. Teilbereich der Giebelflächen 6 werden bei der Vorfaltung (siehe Fig. 1E) nach außen gefaltet und bilden abstehende Bereiche aus überschüssigem Material, die auch als "Ohren" 13 bezeichnet werden und in einem späteren Herstellungsschritt - etwa durch Klebverfahren - an die Packung 11 angelegt werden. In Fig. 1F stehen die Ohren 13 noch von der Packung 11 ab und werden in einem späteren Herstellungsschritt, etwa durch Klebverfahren, angelegt.

Fig. 1G zeigt die Packung 11 aus Fig. 1F mit angelegten Ohren. Die bereits im Zusammenhang mit Fig. 1A bis Fig. 1F beschriebenen Bereiche der Packung 11 sind in Fig. 1G mit entsprechenden Bezugszeichen versehen. Die oberen, im Bereich der Giebelfläche 6 angeordneten Ohren 13 sind nach unten umgeklappt und flach an die Mantelfläche 3 der Packung 11 angelegt. Vorzugsweise sind die oberen Ohren 13 mit der Mantelfläche 3 verklebt oder verschweißt.

Fig. 2A zeigt ein erfindungsgemäßes flächenförmiges Verbundmaterial 1' zum Falten eines Packungsmantels in einer Draufsicht. Die bereits im Zusammenhang mit Fig. 1A bis Fig. 1G beschriebenen Bereiche des Verbundmaterials 1' sind in Fig. 2A mit entsprechenden Bezugszeichen versehen. Die Bodenflächen 5 des Verbundmaterial 1' können in dreieckige Bodenflächen 5' sowie in viereckige Bodenflächen 5" unterteilt werden. Die dreieckigen Bodenflächen 5' bilden Ohren 13 (siehe Fig. 1F), die nach innen oder außen gefaltet und an die Packung angelegt werden; die viereckigen Bodenflächen 5" bestimmen hingegen die Form des Bodens. Bei dem in Fig. 2A gezeigten Verbundmaterial 1' sind die Ecken der viereckigen Bodenflächen 5" etwa rechtwinklig (α_{B} = 90°), so dass eine aus diesem Verbundmaterial 1' hergestellte Packung auch einen etwa rechteckigen, insbesondere etwa quadratischen Boden aufweist. In entsprechender Weise können die Giebelflächen 6 des Verbundmaterials 1' in dreieckige Giebelflächen 6' sowie in viereckige Giebelflächen 6" unterteilt werden. Die dreieckigen Giebelflächen 6' bilden Ohren 13 (siehe Fig. 1F), die nach innen oder außen gefaltet und an die Packung angelegt werden; die viereckigen Giebelflächen 6" bestimmen hingegen die Form des Giebels. Bei dem in Fig. 2A gezeigten Verbundmaterial 1' sind die Ecken der viereckigen Giebelflächen 6" nicht rechtwinklig, sondern etwas kleiner (α_{G1} < 90°) bzw. etwas größer (α_{G2} > 90°) als 90°, wodurch sich eine etwa trapezförmige Form ergibt. Eine aus diesem Verbundmaterial 1' hergestellte Packung weist daher auch einen etwa trapezförmigen Giebel auf. Vorzugsweise liegen die kleinen Giebelflächenwinkel α_{G1} im Bereich zwischen 80° und 90°, während die großen Giebelflächenwinkel α_{G2} im Bereich zwischen 90° und 100° liegen. Diejenige Seite der viereckigen Giebelfläche 6", die an die vordere Fläche 14 angrenzt wird auch als Vorderkante V bezeichnet. Die Vorderkante V ist vorzugsweise in Richtung der vorderen Fläche 14 gekrümmt.

Die Mantelfläche 3 des in Fig. 2A gezeigten Verbundmaterials 1' weist mehrere Faltlinien auf, der die Mantelfläche 3 in mehrere Flächen aufteilt. Die Mantelfläche 3 umfasst eine vordere Fläche 14, eine erste hintere Fläche 15A sowie eine zweite hintere Fläche 15B, eine erste Seitenfläche 16A sowie eine zweite Seitenfläche 16B, eine erste Entlastungsfläche 17A sowie eine zweite Entlastungsfläche 17B. Die vordere Fläche 14 grenzt im Bodenbereich an die viereckige Bodenfläche 5" an und grenzt im Giebelbereich an die viereckige, trapezförmige Giebelfläche 6" an. Seitlich grenzt die vordere Fläche 14 an die erste Entlastungsfläche 17A und an die zweite Entlastungsfläche 17B an. Die beiden Entlastungsflächen 17A, 17B grenzen im Bodenbereich ebenfalls (also wie die vordere Fläche 14) an die viereckige Bodenfläche 5" an; die beiden Entlastungsflächen 17A, 17B grenzen im Giebelbereich jedoch jeweils an eine der dreieckigen Giebelflächen 6' an. Die beiden Seitenflächen 16A, 16B grenzen im Bodenbereich an eine der dreieckigen Bodenfläche 5' an und sie grenzen im Giebelbereich an eine der dreieckigen Giebelflächen 6' an. Seitlich grenzen die beiden Seitenflächen 16A, 16B an ihren Innenseiten an jeweils eine der beiden Entlastungsflächen 17A, 17B an und an ihren Außenseiten an jeweils eine der beiden hinteren Flächen 15A, 15B an (die erste Seitenfläche 16A grenzt an die erste hintere Fläche 15A und die erste Entlastungsfläche 17A an und die zweite Seitenfläche 16B grenzt an die zweite hintere Fläche 15B und die zweite Entlastungsfläche 17B an). Die beiden hinteren Flächen 15A, 15B grenzen im Bodenbereich an die viereckige Bodenfläche 5" an und grenzen im Giebelbereich an die viereckige Giebelfläche 6" an. Seitlich grenzen die beiden hinteren Flächen 15A, 15B an ihren Innenseiten an jeweils eine der beiden Seitenflächen 16A, 16B an (die erste hintere Fläche 15A grenzt an die erste Seitenfläche 16A an und die zweite hintere Fläche 15B grenzt an die zweite Seitenfläche 16B an).

Bei dem in Fig. 2A gezeigten flächenförmigen Verbundmaterial 1' weist die Mantelfläche 3 mehrere Mantelfaltlinien 18', 18", 18'" auf. Die ersten Mantelfaltlinien 18' begrenzen die vordere Fläche 14 seitlich und bilden die Grenzen zwischen der vorderen Fläche 14 und den beiden Entlastungsflächen 17A, 17B. Vorzugsweise sind die beiden ersten Mantelfaltlinien 18' wenigstens abschnittsweise gekrümmt. Die beiden zweiten Mantelfaltlinien 18" bilden die Grenzen zwischen den beiden Entlastungsflächen 17A, 17B und den beiden Seitenflächen 16A, 16B. Vorzugsweise sind auch die beiden zweiten Mantelfaltlinien 18" wenigstens abschnittsweise gekrümmt. Die beiden dritten Mantelfaltlinien 18'" bilden die Grenzen zwischen den beiden Entlastungsflächen 17A, 17B und den beiden hinteren Flächen 15A, 15B. Vorzugsweise sind auch die beiden dritten Mantelfaltlinien 18'" wenigstens abschnittsweise gekrümmt. Das Verbundmaterial 1' weist zudem eine Papier- oder Pappschicht auf, dessen Hauptfaserrichtung F quer (also rechtwinklig zu zwei von den Bodenflächen 5 durch die Mantelfläche 3 zu den Giebelflächen 6 verlaufenden Längskanten L) durch die die Mantelfläche bildenden Flächen 14, 15A, 15B, 16A, 16B, 17A, 17B hindurch verläuft und somit bei einer aus diesem Verbundmaterial 1' hergestellten Packung in Umfangsrichtung der Packung verläuft. Weiterhin weist das Verbundmaterial 1' eine Schwächungszone 19 auf, die dazu dienen kann, die Position eines Ausgießelementes zu definieren. Die Schwächungszone 19 kann als überbeschichtetes Loch oder als vollständig durch das Verbundmaterial 1' gestanztes Loch ausgeführt sein.

Fig. 2B zeigt einen ersten Bereich des Verbundmaterials 1' aus Fig. 2A in vergrößerter Ansicht. Die bereits im Zusammenhang mit Fig. 1A bis Fig. 2A beschriebenen Bereiche des Verbundmaterials 1' sind in Fig. 2B mit entsprechenden Bezugszeichen versehen. Der erste - in Fig. 2B dargestellte - Bereich des Verbundmaterials 1' betrifft den Bereich der Giebelflächen 6, insbesondere den Bereich der Giebelflächenwinkel α_{G1}, α_{G2}. Wie bereits zuvor beschrieben wurde, sind die Ecken der viereckigen Giebelflächen 6" nicht rechtwinklig, sondern etwas kleiner (α_{G1} < 90°) bzw. etwas größer (α_{G2} > 90°) als 90°. Für die hinteren (der Rückseite der Packung zugeordneten) Giebelflächenwinkel α_{G1} liegt die Abweichung von einem rechten Winkel darin begründet, dass eine der beiden an den Winkel α_{G1} angrenzenden Faltlinien nicht rechtwinklig zum Rand des Verbundmaterials 1' verläuft, sondern um einen Winkel β₁ gegenüber einer Senkrechten S₁ geneigt ist (α_{G1=} 90°- β₁). Für die vorderen (der Vorderseite der Packung zugeordneten) Giebelflächenwinkel α_{G2} hat die Abweichung von einem rechten Winkel zwei Gründe: Erstens verläuft eine der beiden an den Winkel α_{G2} angrenzenden Faltlinien nicht rechtwinklig zum Rand des Verbundmaterials 1', sondern um einen Winkel βz gegenüber einer Senkrechten S₂ geneigt. Zweitens verläuft die ebenfalls an den Winkel α_{G2} angrenzende Vorderkante V nicht gerade, sondern in Richtung der vorderen Fläche 14 gekrümmt, wobei die Vorderkante V (bzw. eine Tangente, die die Vorderkante V im Bereich der Ecke bzw. des Winkels α_{G2} berührt) um einen Winkel γ gegenüber einer Waagerechten W (die parallel zum oberen Rand des Verbundmaterials 1' verläuft) geneigt ist (α_{G2} = 90° + β₂ + γ). Der Winkel β₁ entspricht dem Winkel β₂; beide Winkel liegen vorzugsweise im Bereich zwischen 2° und 6°. Die beiden hinteren Giebelflächenwinkel α_{G1} können daher beispielsweise einen Winkel von etwa 86° aufweisen. Der Winkel γ liegt vorzugsweise im Bereich zwischen 15° und 25°. Die beiden vorderen Giebelflächenwinkel α_{G2} können daher beispielsweise einen Winkel von etwa 113° aufweisen. Aus der beschriebenen Gestaltung - insbesondere aus der gekrümmten Vorderkante V - folgt, dass die Winkelsumme der viereckigen Giebelfläche 6" größer ist als 360° (2^{∗}α_{G1} + 2^{∗}α_{G2} > 360°).

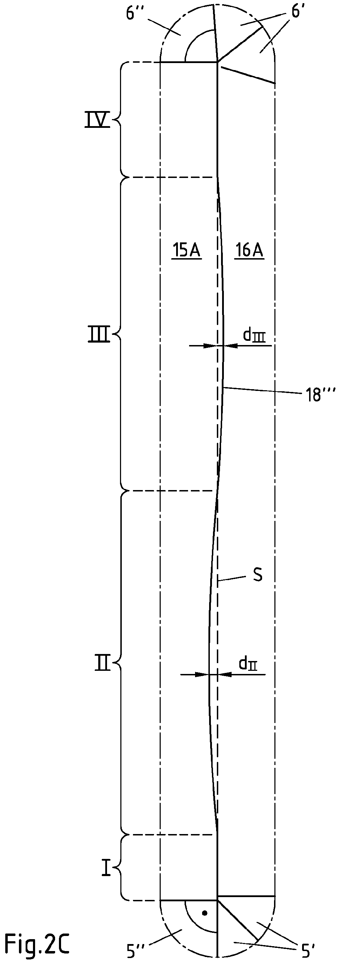

Fig. 2C zeigt einen zweiten Bereich des flächenförmigen Verbundmaterials 1' aus Fig. 2A in vergrößerter Ansicht. Die bereits im Zusammenhang mit Fig. 1A bis Fig. 2B beschriebenen Bereiche des Verbundmaterials 1' sind in Fig. 2C mit entsprechenden Bezugszeichen versehen. Der zweite - in Fig. 2C dargestellte - Bereich des Verbundmaterials 1' betrifft den Bereich der dritten Mantelfaltlinie 18"', die die Seitenflächen 16A, 16B von den hinteren Flächen 15A, 15B trennt. Die zwischen den Seitenflächen 16A, 16B und den daran angrenzenden hinteren Flächen 15A, 15B angeordnete dritte Mantelfaltlinie 18'" weist vier Abschnitte I-IV auf: der erste Abschnitt I grenzt an die Bodenflächen 5 an und verläuft gerade. Der zweite Abschnitt II grenzt an den ersten Abschnitt I an und verläuft gekrümmt (in Richtung der hinteren Flächen 15A, 15B). Infolge der Krümmung ergibt sich ein maximaler Abstand du zwischen der dritte Mantelfaltlinie 18'" und einer Senkrechten S, der im Bereich zwischen 0,5 mm und 2,5 mm liegen kann. Der dritte Abschnitt III grenzt an den zweiten Abschnitt II an und verläuft gekrümmt (in Richtung der Seitenflächen 16A, 16B). Infolge der Krümmung ergibt sich ein maximaler Abstand d_{III} zwischen der dritten Mantelfaltlinie 18‴ und der Senkrechten S, der im Bereich zwischen 0,5 mm und 2,5 mm liegen kann. Der zweite Abschnitt II und der dritte Abschnitt III weisen daher entgegengesetzte Krümmungen bzw. Krümmungsrichtungen auf. Der vierte Abschnitt IV grenzt an den dritten Abschnitt III und an die Giebelflächen 6 an und verläuft gerade. Die dritte Mantelfaltlinie 18'" verläuft daher abschnittsweise gerade (in dem an die Bodenflächen 5 angrenzenden Abschnitt I sowie in dem an die Giebelflächen 6 angrenzenden Abschnitt IV) und abschnittsweise gekrümmt (in den beiden "mittleren" Abschnitten II, III).

Fig. 3A zeigt einen erfindungsgemäßen Packungsmantel 9', der aus dem in Fig. 2A gezeigten flächenförmigen Verbundmaterial 1' gebildet ist, in einer Vorderansicht. Die bereits im Zusammenhang mit Fig. 1A bis Fig. 2C beschriebenen Bereiche des Packungsmantels 9' sind in Fig. 3A mit entsprechenden Bezugszeichen versehen. Der Packungsmantel 9' ist durch zwei Schritte aus dem Verbundmaterial 1' entstanden: Zunächst wird das Verbundmaterial 1' entlang der beiden Scheinfaltlinien 7 gefaltet. Anschließend werden die erste hintere Fläche 15A und die zweite hintere Fläche 15B im Bereich der Siegelfläche 4 miteinander verbunden, insbesondere verschweißt, wodurch eine (in Fig. 3A verdeckte) Längsnaht 10 entsteht. Der Packungsmantel 9' hat also eine umlaufende, in Umfangsrichtung geschlossene Struktur mit einer Öffnung im Bereich der Bodenflächen 5 und mit einer Öffnung im Bereich der Giebelflächen 6. In der Vorderansicht sind die vordere Fläche 14, die beiden Entlastungsflächen 17A, 17B und (teilweise) die beiden Seitenflächen 16A, 16B erkennbar. Die hinteren Flächen 15A, 15B sind auf der Rückseite des Packungsmantels 9' und daher in Fig. 3A verdeckt.

In Fig. 3B ist der Packungsmantel 9' aus Fig. 3A in einer Rückansicht dargestellt. Die bereits im Zusammenhang mit Fig. 1A bis Fig. 3A beschriebenen Bereiche des Packungsmantels 9' sind in Fig. 3A mit entsprechenden Bezugszeichen versehen. In der Rückansicht sind die beiden hinteren Flächen 15A, 15B sichtbar, die durch die Längsnaht 10 miteinander verbunden sind und die beidseitig von den dritten Mantelfaltlinien 18'" begrenzt werden. Zudem sind (teilweise) die beiden Seitenflächen 16A, 16B erkennbar. Die vordere Fläche 14 und die beiden Entlastungsflächen 17A, 17B sind auf der Vorderseite des Packungsmantels 9' und daher in Fig. 3B verdeckt.

Fig. 4A zeigt eine erfindungsgemäße Packung 20, die aus dem in Fig. 3 gezeigten Packungsmantel 9' gebildet ist, in perspektivischer Ansicht. Die bereits im Zusammenhang mit Fig. 1A bis Fig. 3B beschriebenen Bereiche der Packung 20 sind in Fig. 4A mit entsprechenden Bezugszeichen versehen. In Fig. 4A ist besonders gut erkennbar, dass sich die Entlastungsfläche 17A (wie auch nicht dargestellte Entlastungsfläche 17B) im Bereich des Bodens der Vorderseite der Packung 20 zuzuordnen ist, während die Entlastungsfläche 17A im Bereich des Giebels der linken Seite der Packung 20 zuzuordnen ist (die nicht dargestellte Entlastungsfläche 17B ist dementsprechend im Bereich des Giebels der rechten Seite der Packung 20 zuzuordnen). Die Entlastungsflächen 17A, 17B "winden" sich also von der Vorderseite der Packung 20 um eine (fiktive) Kante der Packung 20 herum in Richtung einer Seite der Packung. Die Entlastungsflächen 17A, 17B bilden also einen Übergang von der Vorderseite der Packung 20 (wo sie an die vordere Fläche 14 angrenzen) zu den beiden Seiten der Packung 20 (wo sie an die beiden Seitenflächen 16A, 16B) angrenzen. In Fig. 4A ist zudem erkennbar, dass die Packung 20 einen schrägen Giebel ("Schräggiebel") aufweist, auf dem ein Schraubverschluss 21 angeordnet ist. Erkennbar ist zudem die trapezförmige Gestaltung des Giebels, die dadurch erreicht wird, dass die viereckige Giebelflächen 6" von 90° abweichende Winkel aufweisen (in Fig. 4A weisen die beiden an die hinteren Flächen 15A, 15B angrenzenden kleinen Giebelflächenwinkel α_{G1} einen Winkel von < 90° auf und die beiden an die vordere Fläche 14 angrenzenden großen Giebelflächenwinkel α_{G2} weisen einen Winkel von > 90° auf). Weiterhin ist in Fig. 4A gut erkennbar, dass sowohl die ersten Mantelfaltlinien 18' als auch die zweiten Mantelfaltlinien 18" ebenso wie die dritten Mantelfaltlinien 18'" gekrümmt sind.

Fig. 4B zeigt die Packung 20 aus Fig. 4A in einer Vorderansicht. Die bereits im Zusammenhang mit Fig. 1A bis Fig. 4A beschriebenen Bereiche der Packung 20 sind in Fig. 4B mit entsprechenden Bezugszeichen versehen. In Fig. 4B ist die trapezförmige Gestaltung des Giebels besonders gut erkennbar. Zudem ist der gekrümmte Verlauf der ersten Mantelfaltlinien 18' sowie der zweiten Mantelfaltlinien 18" deutlich sichtbar.

Fig. 4C zeigt die Packung 20 aus Fig. 4A in einer Rückansicht. Die bereits im Zusammenhang mit Fig. 1A bis Fig. 4B beschriebenen Bereiche der Packung 20 sind in Fig. 4C mit entsprechenden Bezugszeichen versehen. In Fig. 4C ist die Zusammensetzung der Rückseite der Packung 20 aus den beiden hinteren Flächen 15A, 15B besonders gut erkennbar. Zudem ist der gekrümmte Verlauf der dritten Mantelfaltlinien 18'" deutlich sichtbar.

Fig. 4D zeigt schließlich die Packung 20 aus Fig. 4A in einer Seitenansicht. Die bereits im Zusammenhang mit Fig. 1A bis Fig. 4C beschriebenen Bereiche der Packung 20 sind in Fig. 4D mit entsprechenden Bezugszeichen versehen. In Fig. 4D ist die Zusammensetzung der linken Seite der Packung 20 aus der ersten Seitenfläche 16A und einem Teil der ersten Entlastungsfläche 17A besonders gut erkennbar. Durch die erste Seitenfläche 16A verläuft auch die (zurückgefaltete) Scheinfaltlinie 7. Für die in Fig. 4D nicht gezeigte gegenüberliegende rechte Seite der Packung 20 gilt entsprechendes, da die beiden Seiten identisch (spiegelsymmetrisch) zueinander gestaltet sind. Zudem ist in Fig. 4D deutlich erkennbar, dass die Packung 20 im oberen Bereich ihrer Vorderseite (rechts in Fig. 4D) konvex nach außen gewölbt ist und im oberen Bereich ihrer Rückseite (links in Fig. 4D) konkav nach innen gewölbt ist.

### Bezugszeichenliste:

- 1, 1':: Flächenförmiges Verbundmaterial
- 2:: Faltlinie
- 3, 3A, 3B:: Mantelfläche
- 4:: Siegelfläche
- 5, 5', 5":: Bodenfläche
- 6, 6', 6":: Giebelfläche
- 7:: Scheinfaltlinie
- 8:: Dreiecksfläche
- 9, 9':: Packungsmantel
- 10:: Längsnaht
- 11:: Packung
- 12:: Flossennaht
- 13:: Ohr
- 14:: Vordere Fläche
- 15A, 15B:: erste und zweite hintere Fläche
- 16A, 16B:: erste und zweite Seitenfläche
- 17A, 17B:: erste und zweite Entlastungsfläche
- 18', 18", 18'":: Mantelfaltlinie
- 19:: Schwächungszone
- 20:: Packung
- 21:: Schraubverschluss
- α_{B}:: Bodenflächenwinkel (der Faltlinien im Bodenbereich)
- α_{G1}, α_{G2}:: Giebelflächenwinkel (der Faltlinien im Giebelbereich)
- β₁, β₂:: Neigungswinkel (gegenüber der Senkrechten S₁, S₂)
- γ:: Neigungswinkel (gegenüber der Waagerechten W)
- d_{II}, d_{III}:: Abstand (zwischen dritter Mantelfaltlinie 18'" und Senkrechte S)
- EA:: Eckachse
- E5:: Eckpunkt (der Bodenfläche 5)
- E6:: Eckpunkt (der Giebelfläche 6)
- F:: Hauptfaserrichtung
- L:: Längskante
- S, S1, S2:: Senkrechte
- SB:: Berührungspunkt (der Dreicksflächen 8 der Bodenfläche 5)
- SG:: Berührungspunkt (der Dreicksflächen 8 der Giebelfläche 6)
- V:: Vorderkante (der viereckigen Giebelfläche 6")
- W:: Waagerechte

- I, II, III, IV:: Abschnitte (der dritten Mantelfaltlinie 18‴)

## Patentansprüche

1. Flächenförmiges Verbundmaterial (1') zur Herstellung einer Packung (20), umfassend:
- eine Polymeraußenschicht,
- eine Polymerinnenschicht,
- eine faserhaltige Trägerschicht, die zwischen der Polymeraußenschicht und der Polymerinnenschicht angeordnet ist,
- wobei das flächenförmige Verbundmaterial (1') eine Vielzahl von Faltlinien aufweist, die so angeordnet und ausgestaltet sind, dass durch Falten des flächenförmigen Verbundmaterials (1') entlang der Faltlinien und durch Verbinden von Nahtflächen des flächenförmigen Verbundmaterials (1') eine geschlossene Packung (20) herstellbar ist,
- eine Mantelfläche (3), wobei die Mantelfläche (3) eine vordere Fläche (14), eine erste Seitenfläche (16A), eine zweite Seitenfläche (16B), eine erste hintere Fläche (15A) und eine zweite hintere Fläche (15B) umfasst,
- Bodenflächen (5), wobei die Bodenflächen (5) dreieckige Bodenflächen (5') und viereckige Bodenflächen (5") umfassen, und
- Giebelflächen (6), wobei die Giebelflächen (6) dreieckige Giebelflächen (6') und viereckige Giebelflächen (6") umfassen,
- wobei die Bodenflächen (5) und die Giebelflächen (6) auf gegenüberliegenden Seiten der Mantelfläche (3) angeordnet sind,
**gekennzeichnet durch**
wenigstens eine viereckige Giebelfläche (6") mit zwei kleinen Giebelflächenwinkeln (α_{G1}), die kleiner sind als 90°, mit zwei großen Giebelflächenwinkeln (α_{G2}), die größer sind als 90° und mit einer Winkelsumme, die größer ist als 360°, wobei wenigstens eine Seite der viereckigen Giebelfläche (6") nach außen gekrümmt ist.

2. Flächenförmiges Verbundmaterial (1') nach Anspruch 1,
**dadurch gekennzeichnet, dass**
wenigstens eine der viereckigen Giebelflächen (6") etwa trapezförmig ist.

3. Flächenförmiges Verbundmaterial (1') nach Anspruch 1 oder 2,
**dadurch gekennzeichnet, dass**
die viereckige Giebelfläche (6") eine an die vordere Fläche (14) angrenzende Vorderkante (V) aufweist, die gekrümmt ist.

4. Flächenförmiges Verbundmaterial (1') nach einem der Ansprüche 1 bis 3,
**gekennzeichnet durch**
zwei Scheinfaltlinien (7), die parallel zueinander durch die Mantelfläche (3) verlaufen.

5. Flächenförmiges Verbundmaterial (1') nach einem der Ansprüche 1 bis 4,
**dadurch gekennzeichnet, dass**
die Mantelfläche (3) wenigstens eine Entlastungsfläche (17A, 17B) aufweist, die zwischen der vorderen Fläche (14) und einer der beiden Seitenflächen (16A, 16B) angeordnet ist.

6. Flächenförmiges Verbundmaterial (1') nach Anspruch 5,
**dadurch gekennzeichnet, dass**
wenigstens eine Entlastungsfläche (17A, 17B) im Bereich der Bodenflächen (5) an eine viereckige Bodenfläche (5") angrenzt und im Bereich der Giebelflächen (6) an eine dreieckige Giebelfläche (6') angrenzt.

7. Flächenförmiges Verbundmaterial (1') nach Anspruch 5 oder Anspruch 6,
**dadurch gekennzeichnet, dass**
zwischen wenigstens einer Entlastungsfläche (17A, 17B) und der daran angrenzenden vorderen Fläche (14) eine erste Mantelfaltlinie (18') vorgesehen ist, die vorzugsweise wenigstens abschnittsweise gekrümmt ist.

8. Flächenförmiges Verbundmaterial (1') nach einem der Ansprüche 5 bis 7,
**dadurch gekennzeichnet, dass**
zwischen wenigstens einer Entlastungsfläche (17A, 17B) und der daran angrenzenden Seitenfläche (16A, 16B) eine zweite Mantelfaltlinie (18") vorgesehen ist, die vorzugsweise wenigstens abschnittsweise gekrümmt ist.

9. Flächenförmiges Verbundmaterial (1') nach einem der Ansprüche 1 bis 8,
**dadurch gekennzeichnet, dass**
zwischen wenigstens einer Seitenfläche (16A, 16B) und der daran angrenzenden hinteren Fläche (15A, 15B) eine dritte Mantelfaltlinie (18"') vorgesehen ist, die vorzugsweise wenigstens abschnittsweise gekrümmt ist.

10. Flächenförmiges Verbundmaterial (1') nach Anspruch 9,
**dadurch gekennzeichnet, dass**
die dritte Mantelfaltlinie (18"') mehrere Abschnitte (I, II, III, IV) aufweist, von denen wenigstens ein Abschnitt (II, III) gekrümmt ist und von denen wenigstens ein Abschnitt (I, IV) gerade ist.

11. Flächenförmiges Verbundmaterial (1') nach Anspruch 9 oder 10,
**dadurch gekennzeichnet, dass**
die dritte Mantelfaltlinie (18"') mehrere Abschnitte (I, II, III, IV) aufweist, von denen der an die Bodenflächen (5) angrenzende Abschnitt (I) und der an die Giebelflächen (6) angrenzende Abschnitt (IV) gerade sind.

12. Flächenförmiges Verbundmaterial (1') nach einem der Ansprüche 9 bis 11,
**dadurch gekennzeichnet, dass**
die dritte Mantelfaltlinie (18"') mehrere Abschnitte (I, II, III, IV) aufweist, von denen wenigstens zwei Abschnitte (II, III) entgegengesetzte Krümmungsrichtungen aufweisen.

13. Flächenförmiges Verbundmaterial (1') nach einem der Ansprüche 1 bis 12,
**dadurch gekennzeichnet, dass**
die faserhaltige Trägerschicht des Verbundmaterials (1') eine Hauptfaserrichtung (F) aufweist, die etwa rechtwinklig zu einer von den Bodenflächen (5) zu den Giebelflächen (6) verlaufenden Längskante (L) des Verbundmaterials (1') verläuft.

14. Packungsmantel (9') aus einem Verbundmaterial zur Herstellung einer Packung (20), umfassend:
- eine Mantelfläche (3), wobei die Mantelfläche (3) eine vordere Fläche (14), eine erste Seitenfläche (16A), eine zweite Seitenfläche (16B), eine erste hintere Fläche (15A) und eine zweite hintere Fläche (15B) umfasst,
- Bodenflächen (5), wobei die Bodenflächen (5) dreieckige Bodenflächen (5') und viereckige Bodenflächen (5") umfassen,
- Giebelflächen (6), wobei die Giebelflächen (6) dreieckige Giebelflächen (6') und viereckige Giebelflächen (6") umfassen,
- zwei Scheinfaltlinien (7), die parallel zueinander durch die Mantelfläche (3) verlaufen, und
- eine Längsnaht (10), die zwei Randbereiche des Verbundmaterials (1') zu einem umlaufenden Packungsmantel (9') verbindet, der sowohl im Bereich der Bodenflächen (5) als auch im Bereich der Giebelflächen (6) offen ist,
- wobei die Bodenflächen (5) und die Giebelflächen (6) auf gegenüberliegenden Seiten der Mantelfläche (3) angeordnet sind, und
- wobei der Packungsmantel (9') entlang von beiden Scheinfaltlinien (7) gefaltet ist,
**gekennzeichnet durch**
wenigstens eine viereckige Giebelfläche (6") mit zwei kleinen Giebelflächenwinkeln (α_{G1}), die kleiner sind als 90°, mit zwei großen Giebelflächenwinkeln (α_{G2}), die größer sind als 90° und mit einer Winkelsumme, die größer ist als 360°, wobei wenigstens eine Seite der viereckigen Giebelfläche (6") nach außen gekrümmt ist.

15. Packungsmantel (9') nach Anspruch 14,
**dadurch gekennzeichnet, dass**
der Packungsmantel (9') aus einem flächenförmigen Verbundmaterial (1') nach einem der Ansprüche 1 bis 13 hergestellt ist.

16. Packungsmantel (9') nach Anspruch 14 oder Anspruch 15,
**dadurch gekennzeichnet, dass**
das Verbundmaterial wenigstens eine Schicht aus Papier oder Pappe aufweist, die an der innerhalb des Packungsmantels (9') verlaufenden Kante der Längsnaht (10) abgedeckt ist.

17. Packungsmantel (9') nach Anspruch 16,
**dadurch gekennzeichnet, dass**
die Schicht aus Papier oder Pappe durch einen Dichtstreifen und/oder durch Umlegen des Verbundmaterials im Bereich der Längsnaht (10) abgedeckt ist.

18. Packungsmantel (9') nach einem der Ansprüche 14 bis 17,
**dadurch gekennzeichnet, dass**
das Verbundmaterial im Bereich der Längsnaht (10) geschält ist.

19. Packung (20) aus einem Verbundmaterial,
- wobei die Packung (20) aus einem flächenförmigen Verbundmaterial (1') nach dem Oberbegriff von Patentanspruch 1 hergestellt ist, oder wobei die Packung (20) aus einem Packungsmantel (9') nach dem Oberbegriff von Patentanspruch 14 hergestellt ist, und
- wobei die Packung (20) im Bereich der Bodenflächen (5) und im Bereich der Giebelflächen (6) verschlossen ist,
**gekennzeichnet durch**
wenigstens eine viereckige Giebelfläche (6") mit zwei kleinen Giebelflächenwinkeln (α_{G1}), die kleiner sind als 90°, mit zwei großen Giebelflächenwinkeln (α_{G2}), die größer sind als 90° und mit einer Winkelsumme, die größer ist als 360°, wobei wenigstens eine Seite der viereckigen Giebelfläche (6") nach außen gekrümmt ist.

20. Packung (20) nach Anspruch 19,
**dadurch gekennzeichnet, dass**
die Packung (20) im Bereich des Giebels eine Flossennaht (12) aufweist, die in Richtung der vorderen Fläche (14) umgelegt ist.

21. Packung (20) nach Anspruch 19 oder Anspruch 20,
**dadurch gekennzeichnet, dass**
die Packung (20) einen Giebel aufweist, der etwa trapezförmig ist.

22. Packung (20) nach einem der Ansprüche 19 bis 21,
**dadurch gekennzeichnet, dass**
die Packung (20) einen Schräggiebel aufweist.

23. Packung (20) nach einem der Ansprüche 19 bis 22,
**dadurch gekennzeichnet, dass**
die Packung (20) im Bereich der vorderen Fläche (14) konvex geformt ist und/oder im Bereich der hinteren Flächen (15A, 15B) konkav geformt ist.

24. Packung (20) nach einem der Ansprüche 19 bis 23,
**dadurch gekennzeichnet, dass**
die Packung (20) eine Entlastungsfläche (17A, 17B) aufweist, die abschnittsweise mit der vorderen Fläche (14) in einer Ebene liegt und die abschnittsweise mit einer Seitenfläche (16A, 16B) in einer Ebene liegt.

## Claims

1. Flat-shaped composite material (1') for manufacturing a package (20), comprising:
- a polymer outer layer,
- a polymer inner layer,
- a fibrous support layer, which is arranged between the polymer outer layer and the polymer inner layer,
- wherein the flat-shaped composite material (1') has a plurality of fold lines, which are arranged and designed such that a closed package (20) can be manufactured by folding the flat-shaped composite material (1') along the fold lines and by connecting seam surfaces of the flat-shaped composite material (1'),
- a sleeve surface (3), wherein the sleeve surface (3) comprises a front surface (14), a first side surface (16A), a second side surface (16B), a first rear surface (15A) and a second rear surface (15B),
- base surfaces (5), wherein the base surfaces (5) comprise triangular base surfaces (5') and quadrangular base surfaces (5"), and
- gable surfaces (6), wherein the gable surfaces (6) comprise triangular gable surfaces (6') and quadrangular gable surfaces (6"),
- wherein the base surfaces (5) and the gable surfaces (6) are arranged on opposite sides of the sleeve surface (3),
**characterised by** at least one quadrangular gable surface (6") with two small gable surface angles (α_{G1}), which are smaller than 90°, with two large gable surface angles (α_{G2}), which are greater than 90°, and with an angle sum, which is greater than 360°, wherein at least one side of the quadrangular gable surface (6") is curved outwards.

2. Flat-shaped composite material (1') according to claim 1, **characterised in that** at least one of the quadrangular gable surfaces (6") is approximately trapezoidal.

3. Flat-shaped composite material (1') according to claim 1 or 2, **characterised in that** the quadrangular gable surface (6") has a front edge (V) which adjoins the front surface (14) and which is curved.

4. Flat-shaped composite material (1') according to any one of claims 1 to 3, **characterised by** two secondary fold lines (7) running parallel to one another through the sleeve surface (3).

5. Flat-shaped composite material (1') according to any one of claims 1 to 4, **characterised in that** the sleeve surface (3) has at least one stress-relief surface (17A, 17B), which is arranged between the front surface (14) and one of the two side surfaces (16A, 16B).

6. Flat-shaped composite material (1') according to claim 5, **characterised in that** at least one stress-relief surface (17A, 17B) adjoins a quadrangular base surface (5") in the region of the base surfaces (5) and adjoins a triangular gable surface (6') in the region of the gable surfaces (6).

7. Flat-shaped composite material (1') according to claim 5 or claim 6, **characterised in that** a first sleeve fold line (18'), which is preferably curved at least in sections, is provided between at least one stress-relief surface (17A, 17B) and the adjoining front surface (14).

8. Flat-shaped composite material (1') according to any one of claims 5 to 7, **characterised in that** a second sleeve fold line (18"), which is preferably curved at least in sections, is provided between at least one stress-relief surface (17A, 17B) and the adjoining side surface (16A, 16B).

9. Flat-shaped composite material (1') according to any one of claims 1 to 8, **characterised in that** a third sleeve fold line (18"), which is preferably curved at least in sections, is provided between at least one side surface (16A, 16B) and the adjoining rear surface (15A, 15B).

10. Flat-shaped composite material (1') according to claim 9 **characterised in that** the third sleeve fold line (18"') has a plurality of sections (I, II, III, IV), of which at least one section (II, III) is curved and of which at least one section (I, IV) is straight.

11. Flat-shaped composite material (1') according to claim 9 or 10, **characterised in that** the third sleeve fold line (18"') has a plurality of sections (I, II, III, IV), of which the section (I) adjoining the base surfaces (5) and the section (IV) adjoining the gable surfaces (6) are straight.

12. Flat-shaped composite material (1') according to any one of claims 9 to 11, **characterised in that** the third sleeve fold line (18‴) has a plurality of sections (I, II, III, IV), of which at least two sections (II, III) have opposite curvature directions.

13. Flat-shaped composite material (1') according to any one of claims 1 to 12, **characterised in that** the fibrous support layer of the composite material (1') has a main fibre direction (F), which runs approximately at right angles to a longitudinal edge (L) of the composite material (1') running from the base surfaces (5) to the gable surfaces (6).

14. Package sleeve (9') made of a composite material for manufacturing a package (20), comprising:
- a sleeve surface (3), wherein the sleeve surface (3) comprises a front surface (14), a first side surface (16A), a second side surface (16B), a first rear surface (15A) and a second rear surface (15B),
- base surfaces (5), wherein the base surfaces (5) comprise triangular base surfaces (5') and quadrangular base surfaces (5"),
- gable surfaces (6), wherein the gable surfaces (6) comprise triangular gable surfaces (6') and quadrangular gable surfaces (6"),
- two secondary fold lines (7), which run parallel to one another through the sleeve surface (3), and
- a longitudinal seam (10), which connects two edge regions of the composite material (1') to form a circumferential package sleeve (9'), which is open both in the region of the base surfaces (5) and in the region of the gable surfaces (6),
- wherein the base surfaces (5) and the gable surfaces (6) are arranged on opposite sides of the sleeve surface (3), and
- wherein the package sleeve (9') is folded along both secondary fold lines (7), **characterised by** at least one quadrangular gable surface (6") with two small gable surface angles (α_{G1}), which are smaller than 90°, with two large gable surface angles (α_{G2}), which are greater than 90°, and with an angle sum, which is greater than 360°, wherein at least one side of the quadrangular gable surface (6") is curved outwards.

15. Package sleeve (9') according to claim 14, **characterised in that** the package sleeve (9') is manufactured from a flat-shaped composite material (1') according to any one of claims 1 to 13.

16. Package sleeve (9') according to claim 14 or claim 15, **characterised in that** the composite material has at least one layer of paper or cardboard which is covered on the edge of the longitudinal seam (10) running within the package sleeve (9').

17. Package sleeve (9') according to claim 16, **characterised in that** the layer of paper or cardboard is covered by a sealing strip and/or by turning over the composite material in the region of the longitudinal seam (10).

18. Package sleeve (9') according to any one of claims 14 to 17, **characterised in that** the composite material is peeled in the region of the longitudinal seam (10).

19. Package (20) made of a composite material,
- wherein the package (20) is manufactured from a flat-shaped composite material (1') according to the preamble of claim 1, or wherein the package (20) is manufactured from a package sleeve (9') according to the preamble of claim 14, and
- wherein the package (20) is sealed in the region of the base surfaces (5) and in the region of the gable surfaces (6),
**characterised by** at least one quadrangular gable surface (6") with two small gable surface angles (α_{G1}), which are smaller than 90°, with two large gable surface angles (α_{G2}), which are greater than 90°, and with an angle sum, which is greater than 360°, wherein at least one side of the quadrangular gable surface (6") is curved outwards.

20. Package (20) according to claim 19, **characterised in that** the package (20) has a fin seam (12) in the region of the gable, which is turned over in the direction of the front surface (14).

21. Package(20) according to claim 19 or claim 20, **characterised in that** the package (20) has a gable which is approximately trapezoidal.

22. Package (20) according to any one of claims 19 to 21, **characterised in that** the package (20) has an inclined gable.

23. Package (20) according to any one of claims 19 to 22, **characterised in that** the package (20) is convex in the region of the front surface (14) and/or is concave in the region of the rear surfaces (15A, 15B).

24. Package (20) according to any one of claims 19 to 23, **characterised in that** the package (20) has a stress-relief surface (17A, 17B), which lies in a plane in sections with the front surface (14) and which lies in a plane in sections with a side surface (16A, 16B).

## Revendications

1. Matériau composite plan (1`) pour la production d'un paquet (20) comprenant :
- une couche polymère extérieure,
- une couche polymère intérieure,
- une couche de support contenant des fibres qui est disposée entre la couche polymère extérieure et la couche polymère intérieure,
- le matériau composite plan (1') présentant une pluralité de lignes de pliage qui sont agencées et conçues de manière à ce qu'un paquet fermé (20) puisse être produit par pliage du matériau composite plan (1`) le long des lignes de pliage et par raccordement des surfaces de jonction du matériau composite plan (1'),
- une surface périphérique (3), laquelle surface périphérique (3) comprend une surface avant (14), une première surface latérale (16A), une deuxième surface latérale (16B), une première surface arrière (15A) et une deuxième surface arrière (15B),
- des surfaces de base (5), lesquelles surfaces de base (5) comprennent des surfaces de base triangulaires (5') et des surfaces de base rectangulaires (5") ; et
- des surfaces de pignon (6), lesquelles surfaces de pignon (6) comprennent des surfaces de pignon triangulaires (6') et des surfaces de pignon rectangulaires (6") ;
- lesdites surfaces de base (5) et lesdites surfaces de pignon (6) étant disposées sur des côtés opposés de la surface périphérique (3),
**caractérisé par** au moins une surface de pignon rectangulaire (6") pourvue de deux petits angles de surface de pignon (α_{G1}) qui sont inférieurs à 90°, ainsi que de deux grands angles de surface de pignon (α_{G2}) qui sont supérieurs à 90° et avec un angle total qui est supérieur à 360°, au moins un côté de la surface de pignon rectangulaire (6") étant courbé vers l'extérieur.

2. Matériau composite plan (1`) selon la revendication 1, **caractérisé en ce qu'**au moins une des surfaces de pignon rectangulaire (6") est approximativement trapézoïdale.

3. Matériau composite plan (1') selon la revendication 1 ou 2, **caractérisé en ce que** la surface de pignon rectangulaire (6") présente un bord avant (V) adjacent à la surface avant (14) étant courbé.

4. Matériau composite plan (1`) selon l'une des revendications 1 à 3, **caractérisé par** deux lignes de pliage apparentes (7) parallèles l'une à l'autre à travers la surface périphérique (3).

5. Matériau composite plan (1`) selon l'une des revendications 1 à 4, **caractérisé en ce que** la surface périphérique (3) présente au moins une surface de décharge (17A, 17B) agencée entre la surface avant (14) et l'une des deux surfaces latérales (16A, 16B).

6. Matériau composite plan (1`) selon la revendication 5, **caractérisé en ce qu'**au moins une surface de décharge (17A, 17B) dans la partie des surfaces de base (5) adjacente à une surface base rectangulaire (5") et adjacente dans la partie des surfaces de pignon (6) à une surface de pignon triangulaire (6').

7. Matériau composite plan (1`) selon la revendication 5 ou la revendication 6, **caractérisé en ce qu'**une première ligne de pliage de manchon (18') est prévue entre au moins une surface de décharge (17A, 17B) et la surface avant (14) adjacente qui est, de préférence, courbée, au moins par section.

8. Matériau composite plan (1`) selon l'une des revendications 5 à 7, **caractérisé en ce qu'**une deuxième ligne de pliage de manchon (18") est prévue entre au moins une surface de décharge (17A, 17B) et la surface latérale (16A, 16B) adjacente qui est, de préférence, courbée, au moins par section.

9. Matériau composite plan (1`) selon l'une des revendications 1 à 8, **caractérisé en ce qu'**une troisième ligne de pliage de manchon (18") est prévue entre au moins une surface latérale (16A, 16B) et la surface arrière (15A, 15B) adjacente qui est, de préférence, courbée, au moins par section.

10. Matériau composite plan (1`) selon la revendication 9, **caractérisé en ce que** la troisième ligne de pliage de manchon (18"') présente plusieurs sections (I, II, III, IV), dont au moins une section (II, III) est courbée et dont au moins une section (I, IV) est droite.

11. Matériau composite plan (1`) selon la revendication 9 ou 10, **caractérisé en ce que** la troisième ligne de pliage de manchon (18"') présente plusieurs sections (I, II, III, IV), dont la section adjacente aux surfaces de base (5) (I) et la section adjacente aux surfaces de pignon (6) (IV) sont droites.

12. Matériau composite plan (1`) selon l'une des revendications 9 à 11, **caractérisé en ce que** la troisième ligne de pliage de manchon (18"') présente plusieurs sections (I, II, III, IV), dont au moins deux sections (II, III) présentent des directions de courbure opposés.

13. Matériau composite plan (1`) selon l'une des revendications 1 à 12, **caractérisé en ce que** la couche de support contenant des fibres du matériau composite (1`) présente une direction de fibre principale (F) qui s'étend approximativement à angle droit par rapport à un bord longitudinal (L) du matériau composite (1`) s'étendant des surfaces de base (5) jusqu'au surfaces de pignon (6).

14. Manchon de paquet (9') en matériau composite pour la fabrication d'un paquet (20) comprenant :
- une surface périphérique (3), laquelle surface périphérique (3) comprend une surface avant (14), une première surface latérale (16A), une deuxième surface latérale (16B), une première surface arrière (15A) et une deuxième surface arrière (15B),
- des surfaces de base (5), les surfaces de base (5) comprenant des surfaces de base triangulaires (5') et des surfaces de base rectangulaires (5") ;
- des surfaces de pignon (6), lesquelles surfaces de pignon (6) comprennent des surfaces de pignon triangulaires (6') et des surfaces de pignon rectangulaires (6") ;
- deux lignes de pliage apparentes (7) qui s'étendent parallèlement l'une à l'autre à travers la surface périphérique (3), et
- une jonction longitudinale (10) qui relie deux zones de bordure du matériau composite (1') en un manchon de paquet (9') périphérique ouvert aussi bien au niveau des surfaces de base (5) qu'au niveau des surfaces de pignon (6),
- les surfaces de base (5) et les surfaces de pignon (6) sont agencées sur les côtés opposés de la surface périphérique (3), et
- le manchon de paquet (9') étant plié le long des deux lignes de pliage apparentes (7),
**caractérisé par** au moins une surface de pignon rectangulaire (6") pourvue de deux petits angles de surface de pignon (α_{G1}) qui sont inférieurs à 90°, ainsi que de deux grands angles de surface de pignon (α_{G2}) qui sont supérieurs à 90° et avec un angle total qui est supérieur à 360°, au moins un côté de la surface de pignon rectangulaire (6") étant courbé vers l'extérieur.

15. Manchon de paquet (9') selon la revendication 14, **caractérisé en ce que** le manchon de paquet (9') est fabriqué en un matériau composite plan (1`) selon l'une des revendications 1 à 13.

16. Manchon de paquet (9') selon la revendication 14 ou la revendication 15, **caractérisé en ce que** le matériau composite présente au moins une couche de papier ou de carton qui est recouverte sur le bord de la jonction longitudinale (10) passant à l'intérieur du manchon de paquet (9').

17. Manchon de paquet (9') selon la revendication 16, **caractérisé en ce que** la couche de papier ou de carton est recouverte par une bande d'étanchéité et/ou par le repli du matériau composite dans la zone de la jonction longitudinale (10).

18. Manchon de paquet (9') selon l'une des revendications 14 à 17, **caractérisé en ce que** le matériau composite est pelé dans la zone de la jonction longitudinale (10).

19. Paquet (20) en un matériau composite,
- ledit paquet (20) étant fabriqué en matériau composite plan (1`) selon le préambule de la revendication 1, ou ledit paquet (20) étant fabriqué à partir d'un manchon de paquet (9') selon le préambule de la revendication 14, et
- ledit paquet (20) étant fermé au niveau des surfaces de base (5) et au niveau des surfaces du pignon (6),
**caractérisé par** au moins une surface de pignon rectangulaire (6") pourvue de deux petits angles de surface de pignon (α_{G1}) qui sont inférieurs à 90°, ainsi que de deux grands angles de surface de pignon (α_{G2}) qui sont supérieurs à 90° et avec un angle total qui est supérieur à 360°, au moins un côté de la surface de pignon rectangulaire (6") étant courbé vers l'extérieur.

20. Paquet (20) selon la revendication 19, **caractérisé en ce que** le paquet (20) présente dans la zone du pignon une jonction en éventail (12) repliée en direction de la surface avant (14).

21. Paquet (20) selon la revendication 19 ou la revendication 20, **caractérisé en ce que** le paquet (20) présente un pignon qui est approximativement trapézoïdal.

22. Paquet (20) selon l'une des revendications 19 à 21, **caractérisé en ce que** le paquet (20) présente un pignon oblique.

23. Paquet (20) selon l'une des revendications 19 à 22, **caractérisé en ce que** le paquet (20) est de forme convexe dans la zone de la surface avant (14) et/ou est de forme concave dans la zone des surfaces arrière (15A, 15B).

24. Paquet (20) selon l'une des revendications 19 à 23, **caractérisé en ce que** le paquet (20) présente une surface de décharge (17A, 17B) qui est située, par section avec la surface avant (14), dans un même plan et qui est située, par section avec une surface latérale (16A, 16B), dans un même plan.
